# EUROPÄISCHE PATENTSCHRIFT

(11) **EP 1 494 844 B1**
(45) Veröffentlichungstag und Bekanntmachung des Hinweises auf die Patenterteilung: **14.09.2005**
(21) Anmeldenummer: 03727278.8
(22) Anmeldetag: 04.04.2003
(51) Int. Cl.: B29C 45/67

(54) **HYDRAULIKEINRICHTUNG ZUM HIN- UND HERBEWEGEN EINES MASCHINENTEILS SOWIE MIT EINER SOLCHEN HYDRAULIKEINRICHTUNG AUSGESTATTETE SCHLIESSEINHEIT EINER SPRITZGIESSMASCHINE**
HYDRAULIC DEVICE FOR BACK AND FORTH DISPLACEMENT OF A MACHINE PIECE AND A CLOSING UNIT ON AN INJECTION MOULDING MACHINE FITTED WITH SUCH A HYDRAULIC DEVICE
DISPOSITIF HYDRAULIQUE POUR ACTIONNER D'UN MOUVEMENT ALTERNATIF UNE PIECE DE MACHINE ET UNITE DE FERMETURE DE MACHINE DE MOULAGE PAR INJECTION EQUIPEE DE CE DISPOSITIF HYDRAULIQUE

(30) Priorität: 05.04.2002 DE 10215072
(43) Veröffentlichungstag der Anmeldung: 12.01.2005
(73) Patentinhaber: BILLION S.A., 01104 Oyonnax/Cedex (FR)
(72) Erfinder: JEANJEAN, Gilbert, F-01100 Oyonnax (FR); GUYON, Jean-François, F-01100 Groissiat (FR)
(74) Vertreter: Wilhelm, Ludwig
(86) Internationale Anmeldenummer: PCT/EP2003/003555
(87) Internationale Veröffentlichungsnummer: WO 2003/084733

(56) Entgegenhaltungen:
- EP-A- 0 281 330
- EP-A- 0 342 235
- DE-U- 8 533 535

## Beschreibung

Die Erfindung betrifft eine Hydraulikeinrichtung zum Hin- und Herbewegen eines Maschinenteils gemäß dem Oberbegriff von Patentanspruch 1. Die Erfindung betrifft desweiteren eine mit einer solchen Hydraulikeinrichtung ausgestattete Schließeinheit einer Spritzgießmaschine.

Aus dem Stand der Technik sind verschiedene Ausführungsformen von Hydraulikeinrichtungen bekannt, bei denen eine Funktionsaufteilung dergestalt vorhanden ist, dass einerseits mit einer geringen Kraft und einer hohen Geschwindigkeit das Schließen und Öffnen und dass andererseits mit einer hohen Kraft und einer geringen Geschwindigkeit das Zufahren und die Verriegelung der Formhälften des Spritzgießwerkzeugs erfolgen.

Aus der DE 6605115 U1 ist es bekannt, an einem Ende einer Kolbenstange einen ersten Kolben mit einem vergleichsweise kleinen Durchmesser als Eilgangkolben und an dem anderen Ende der Kolbenstange einen zweiten Kolben mit einem demgegenüber deutlich größeren Durchmesser als Arbeitskolben anzuordnen und jeden dieser Kolben in separaten Zylindern zu führen. Auf diese Weise kann für den Eilgangkolben eine kleine mit Druckmittel beaufschlagbare Fläche und für den Arbeitskolben eine deutlich größere mit Druckmittel beaufschlagbare Fläche zur Verfügung gestellt werden.

Aus den Dokumenten DE 9013791 U1 und FR 2739149 ist es bekannt, den Arbeitskolben in einem Arbeitszylinder zu führen und den Eilgangzylinder im Inneren der Kolbenstange des Arbeitskolbens anzuordnen. Um eine möglichst hohe Schließkraft erzeugen zu können, kann gemäß DE 9013791 U1 die wirksame Fläche des Arbeitskolbens geeignet groß ausgelegt werden oder gemäß FR 2739149 sowohl die Kammer für den Arbeitskolben als auch die Kammer für den Eilgangkolben in geeigneter Weise unter Druck gesetzt werden, so dass die wirksame Fläche des Eilgangkolbens an der Erzeugung der Verriegelungskraft beteiligt ist.

Desweiteren sind Hydraulikeinrichtungen bekannt (DE 9014885 U1, DE 1805938 A1), bei denen die Kolbenstangen und die Zylinder von Eilgangkolben einerseits und Arbeitskolben andererseits ineinander verschiebbar sind und zum Aufbau der Schließkraft sowie zum Verriegeln zunächst der Eilgangkolben und der Arbeitskolben gegeneinander hydraulisch verriegelt werden können und zum Verriegeln des Maschinenteils nur noch der Arbeitskolben mit Druckmittel beaufschlagt wird.

Aus der DE 8533535 U1 ist eine Hydraulikeinrichtung gemäß dem Oberbegriff von Patentanspruch 1 bekannt. In einem Zylinder ist ein erster, großer Druckraum mit einem Druckmedium vorgesehen, in dem ein Hauptkolben axial verschiebbar ist, der mehrere Kolbenstangen aufweist, die an das zu bewegende Maschinenteil gekuppelt sind. Der Hauptkolben verfügt über mehrere Durchlässe, durch die das Druckmedium von einer Seite des Hauptkolbens auf die andere Seite fließen kann, so dass der Hauptkolben in dem Druckmedium schwimmen kann. Mit einem in dem Hauptkolben angeordneten, axial bewegbaren und verriegelbaren, kleinen Hilfskolben kann ein Klappenventil betätigt werden, um die Durchlässe in dem Hauptkolben freizugeben oder zu verschließen. Im geschlossenen Zustand wird das Schwimmen des Hauptkolbens unterbunden.

Diese bekannte Vorrichtung funktioniert im wesentlichen wie folgt:
Die mit dem Druckmedium beaufschlagbaren Flächen sind so aufeinander abgestimmt, dass bei geöffnetem Klappenventil und Zufuhr von Druckmedium in den Druckraum der Hauptkolben schwimmend nach rechts gedrückt und das Werkzeug der Spritzgießmaschine zugefahren wird. Dabei wird nur wenig Druckmedium benötigt und die Bewegung erfolgt mit großer Geschwindigkeit, aber mit kleiner Kraft. Zum Zuhalten der Formhälften des Spritzgießwerkzeugs wird mit dem im Hauptkolben angeordneten, kleinen Hilfskolben das Klappenventil betätigt und das Schwimmen des Hauptkolbens unterbunden. Somit wird nur noch auf der den Kolbenstangen abgewandten Seite des Hauptkolbens Druck aufgebaut und das Spritzgießwerkzeug mit kleiner Geschwindigkeit, aber großer Kraft eine letzte Strecke zugefahren und anschließend zugehalten. Zum Öffnen des Spritzgießwerkzeugs werden die Zusatzzylinder, in denen sich die Kolbenstangen des Hauptkolbens befinden, mit Druckmedium beliefert und das Klappenventil geöffnet. Der Hauptkolben kann nunmehr schwimmend nach links bewegt werden und das Spritzgießwerkzeug öffnet sich.

Nachteilig an dieser Vorrichtung ist, dass die Anordnung des Hilfskolbens im Inneren des Hauptkolbens zur Betätigung des Klappenventils vergleichsweise aufwendig zu realisieren ist und dass die Hydraulikleitungen zum Betätigen des Hilfskolbens so durch den Zylinder hindurchgeführt und an den im Hauptkolben befindlichen Druckraum des Hilfskolbens angeschlossen werden müssen, dass sie mitbewegt werden können, wenn der Hauptkolben in dem Hauptzylinder hin- und herbewegt wird. Weiterhin nachteilig ist, dass für die Kolbenstangen des Hauptkolbens separate und an den Hauptzylinder angebaute Zusatzzylinder sowie mittig ein weiterer Zusatzzylinder für einen Ausgleichskolben vorgesehen sind, so dass die gesamte Länge der Hydraulikeinrichtung deutlich größer ist als die Länge des Hauptzylinders selbst.

Demgegenüber liegt der Erfindung die Aufgabe zugrunde, eine gattungsgemäße Hydraulikeinrichtung anzugeben, die mit einem einzigen Zylinder auskommt und die damit deutlich kürzer baut. Desweiteren liegt der Erfindung die Aufgabe zugrunde, eine Schließeinheit einer Spritzgießmaschine anzugeben, die gegenüber dem Stand der Technik kürzer baut und vergleichsweise wenig Druckmittel zum Hin- und Herbewegen der beweglichen Werkzeugaufspannplatte benötigt.

Die Lösung der erstgenannten Aufgabe erfolgt durch eine Hydraulikeinrichtung mit den Merkmalen von Patentanspruch 1. Vorteilhafte Weiterentwicklungen und Ausgestaltungen finden sich in den Unteransprüchen 2 bis 11. Die Lösung der zweitgenannten Aufgabe erfolgt durch Schließeinheiten mit den Merkmalen der nebengeordneten Patentansprüche 12, 13, 14, 19 und 20.

Der Hauptvorteil der Erfindung liegt darin, dass der Hauptkolben sowohl für das Hin- und Herbewegen des Maschinenteils mit großer Geschwindigkeit und geringer Kraft bei geringem Druckmediumbedarf als auch zum Verriegeln des Maschinenteils mit kleiner Geschwindigkeit und großer Kraft zur Verfügung steht, wobei für alle Bewegungsphasen nur ein (Haupt)Zylinder benötigt wird und die Hydraulikeinrichtung damit entsprechend kurz ist.

Die Ausgestaltungen gemäß den Ansprüchen 14 bis 18 (für eine Drei-Platten-Schließeinheit) sowie den Ansprüchen 24 bis 27 (für eine Zwei-Platten-Schließeinheit) haben den besonderen Vorteil, dass für das Schließen und das Öffnen der Formhälften nur sehr wenig Öl benötigt wird, da der der große Druckraum hydraulisch blockiert ist und geringe Bewegungen des Hilfskolbens zwangsweise große Wege des Hauptkolbens bewirken. Der Zusatzzylinder kann für die Schließbewegung auch ausgeschaltet werden, da er nur für das Öffnen unverzichtbar ist. Dies ergibt eine zusätzliche Reduktion im Ölverbrauch. Da der Zusatzzylinder nur für das Öffnen benötigt wird, kann er auch so eingebaut werden, dass der große Zusatzdruckraum für das Öffnen mit dem Druckmedium versorgt wird, so daß eine größere, mit Druckmedium beaufschlagte Fläche zur Verfügung steht. Damit steht eine höhere Kraft zur Verfügung, was gerade zu Anfang des Öffnens von Vorteil ist. Ein weiterer Vorteil liegt bei dieser Variante darin, dass gegen Ende der Schließbewegung das Abbremsen der Werkzeugaufspannplatte exakter geregelt werden kann, was ein Abbremsen erst "im letzten Moment" ermöglicht.

Nachfolgend soll die Erfindung anhand von Ausführungsbeispielen und unter Bezugnahme auf die Figuren 1 bis 18 näher erläutert werden. Es zeigen:
- Fig.1: Längsschnitt durch eine erste Ausführungsform der Hydraulikeinrichtung im Zusammenhang mit einer Drei-Platten-Schließeinheit einer Spritzgießmaschine bei geöffneter Form;
- Fig.2: Längsschnitt gemäß Figur 1 bei geschlossener Form;
- Fig.3: Vergrößerte Darstellung eines Details aus Figur 2;
- Fig.4: Schaltplan der Hydraulikeinrichtung in der ersten Ausführungsform für verschiedene Phasen des Spritzgießzyklus:
(1) Zufahren der Formhälften
(2) Verriegelung der Formhälften
(3) Entriegelung der Formhälften
(4) Öffnen der Formhälften
- Fig.5: Längsschnitt durch eine zweite Ausführungsform der Hydraulikeinrichtung im Zusammenhang mit einer Zwei-Platten-Schließeinheit einer Spritzgießmaschine bei geöffneter Form;
- Fig.6: Schaltplan der Hydraulikeinrichtung in der zweiten Ausführungsform für verschiedene Phasen des Spritzgießzyklus:
(1) Zufahren der Formhälften
(2) Verriegelung der Formhälften
(3) Entriegelung der Formhälften
(4) Öffnen der Formhälften
- Fig.7: Schematische Darstellung der Verwendung einer Hydraulikeinrichtung gemäß der zweiten Ausführungsform bei einer Zwei-Platten-Schließeinheit mit Befestigung der Kolbenstangen an der festen Werkzeugaufspannplatte und Befestigung der Zylinder an der beweglichen Werkzeugaufspannplatte;
- Fig.8: Schematische Darstellung der Verwendung einer Hydraulikeinrichtung gemäß der zweiten Ausführungsform bei einer Zwei-Platten-Schließeinheit mit Befestigung der Kolbenstangen an der beweglichen Werkzeugaufspannplatte und Befestigung der Zylinder an der festen Werkzeugaufspannplatte;
- Fig.9 - 12: Dritte Ausführungsform der Hydraulikeinrichtung bei einer Drei-Platten-Schließeinheit einer Spritzgießmaschine mit Schaltplan der Hydraulikeinrichtung für verschiedene Phasen des Spritzgießzyklus:

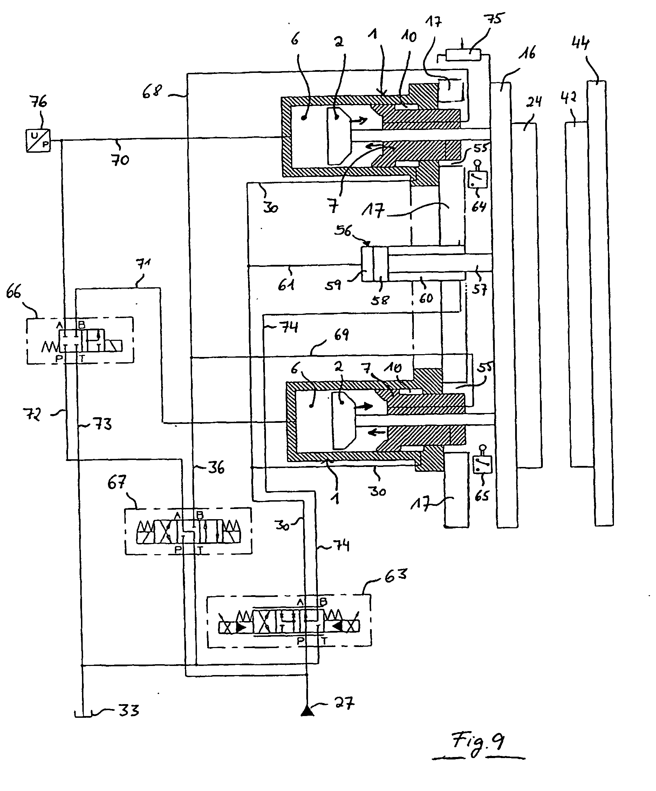

Fig.9 Zufahren der Formhälften

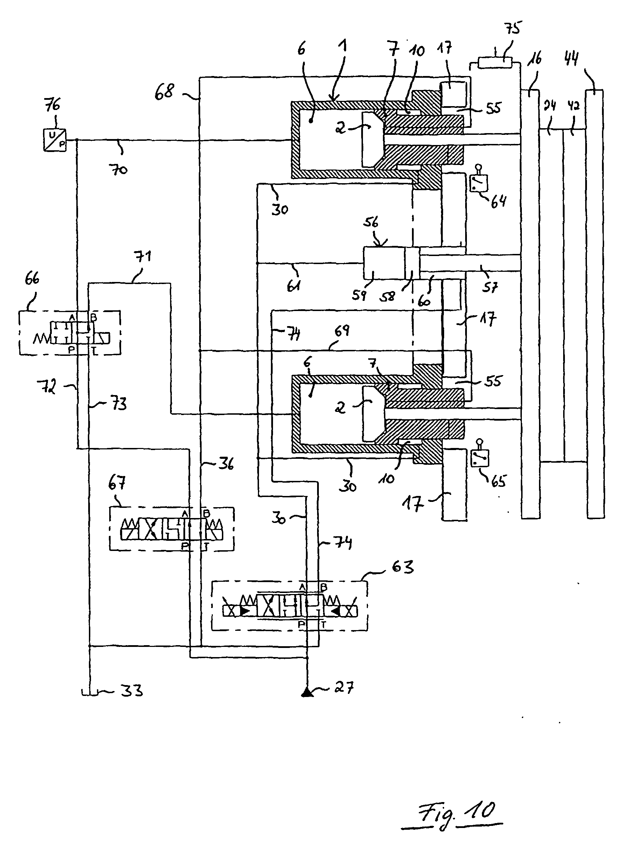

Fig.10 Verriegelung der Formhälften

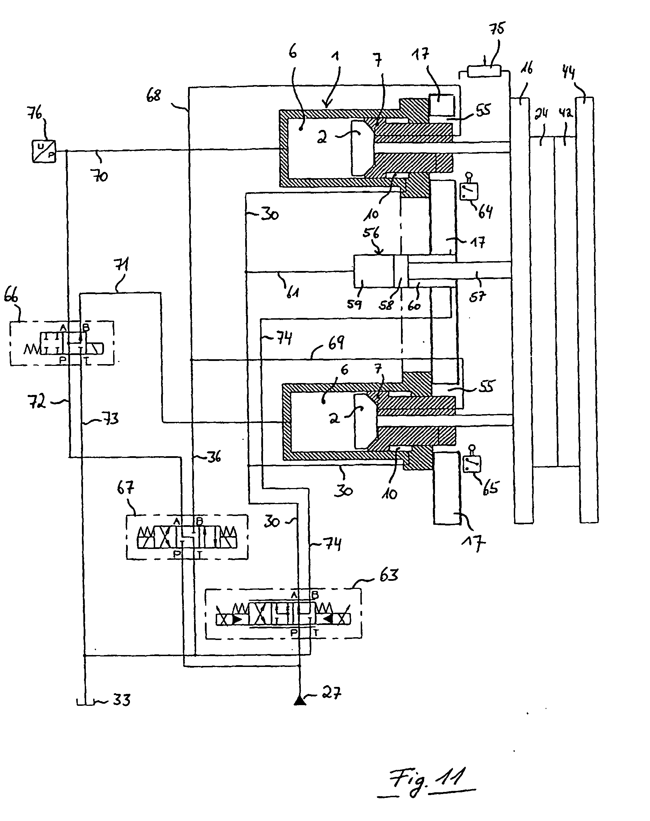

Fig.11 Entriegelung der Formhälften

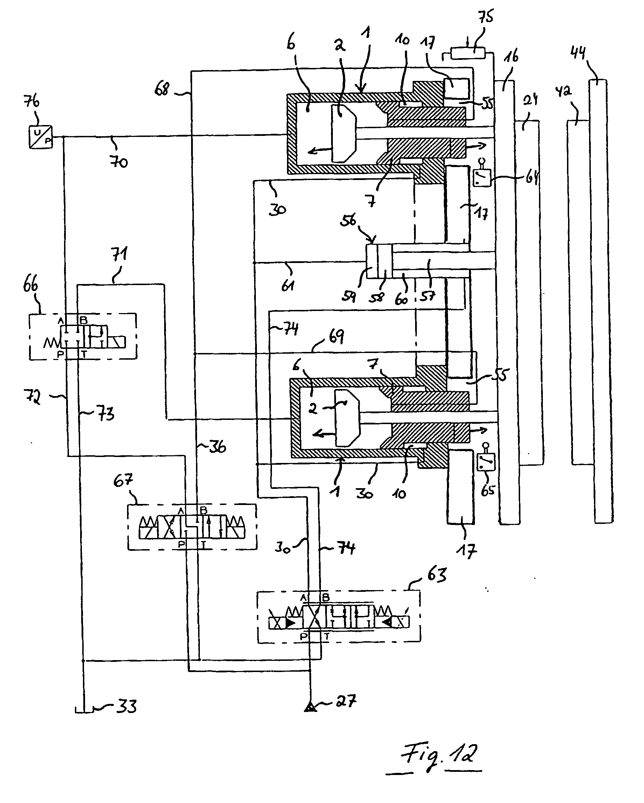

Fig.12 Öffnen der Formhälften

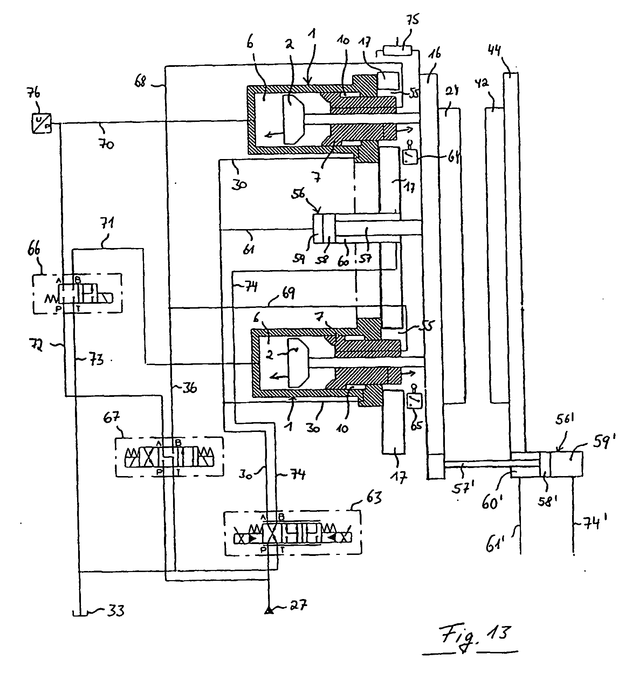

- Fig. 13: eine Abwandlung der dritten Ausführungsform;

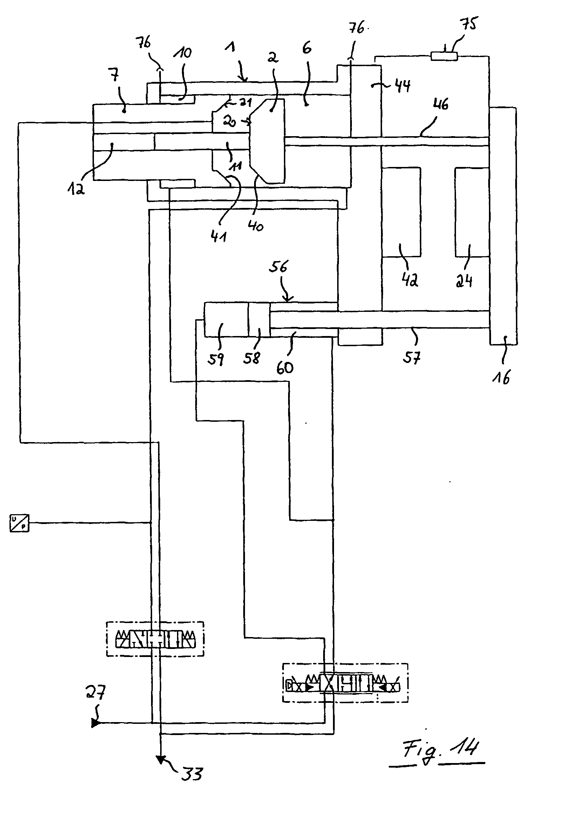

- Fig.14 - 17: Vierte Ausführungsform der Hydraulikeinrichtung bei einer Zwei-Platten-Schließeinheit einer Spritzgießmaschine mit der Hydraulikeinrichtung und einem Zusatzzylinder an der feststehenden Werkzeugaufspannplatte, mit Schaltplan der Hydraulikeinrichtung für verschiedene Phasen des Spritzgießzyklus:
Fig.14 Zufahren der Formhälften

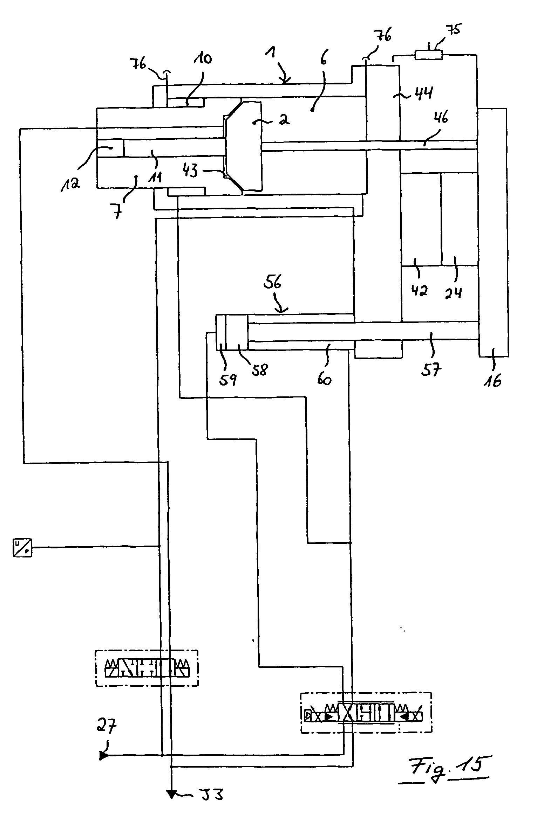

Fig.15 Verriegelung

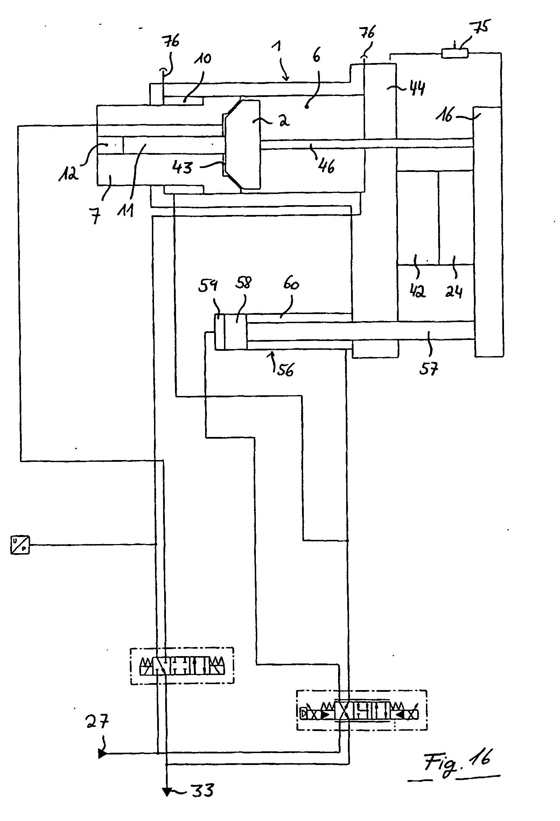

Fig.16 Entriegelung

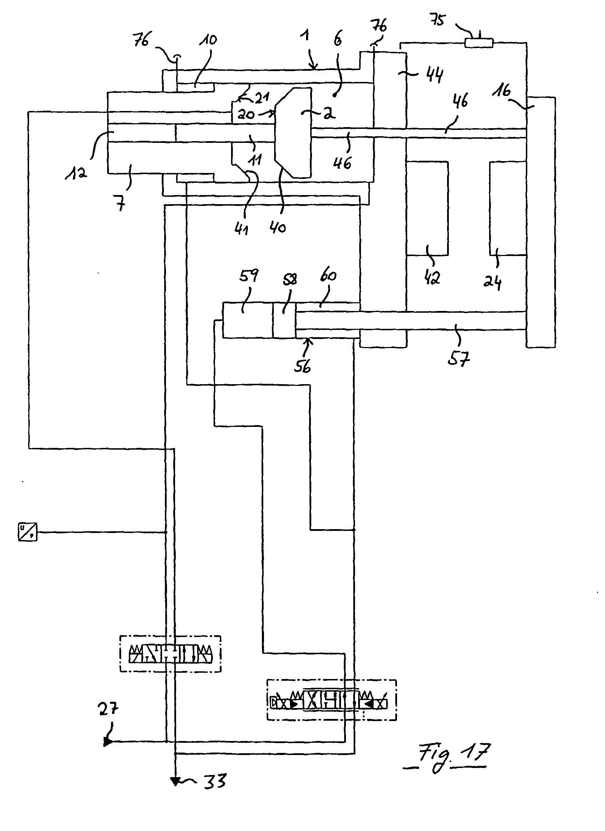

Fig.17 Öffnen der Formhälfen

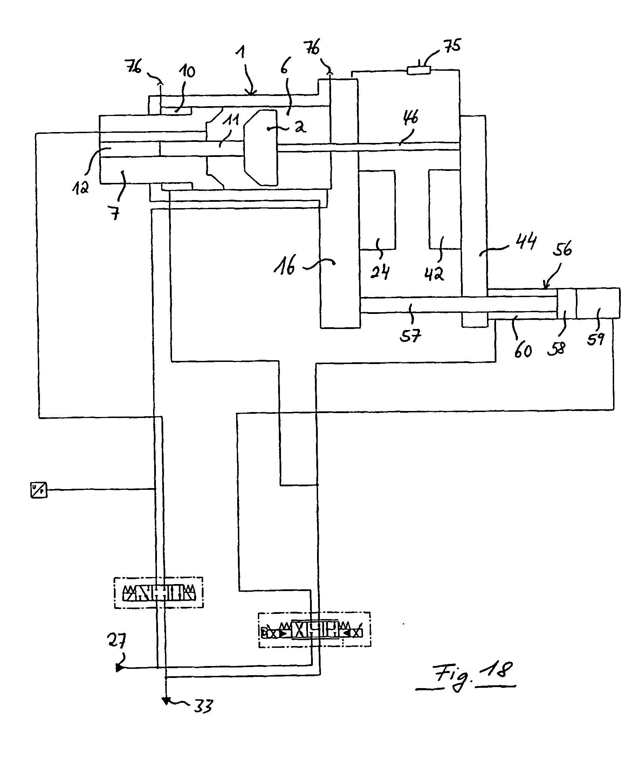

- Fig.18: Vierte Ausführungsform der Hydraulikeinrichtung bei einer Zwei-Platten-Schließeinheit einer Spritzgießmaschine mit der Hydraulikeinrichtung an der beweglichen und einem Zusatzzylinder an der feststehenden Werkzeugaufspannplatte.

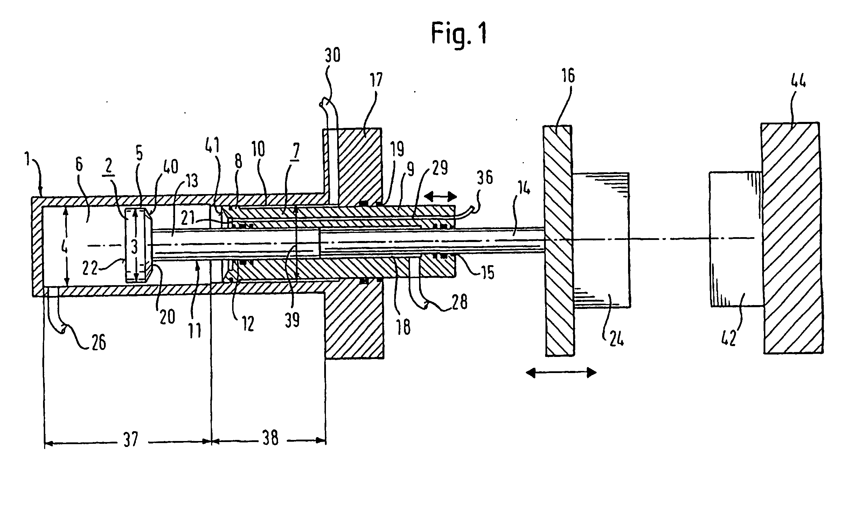

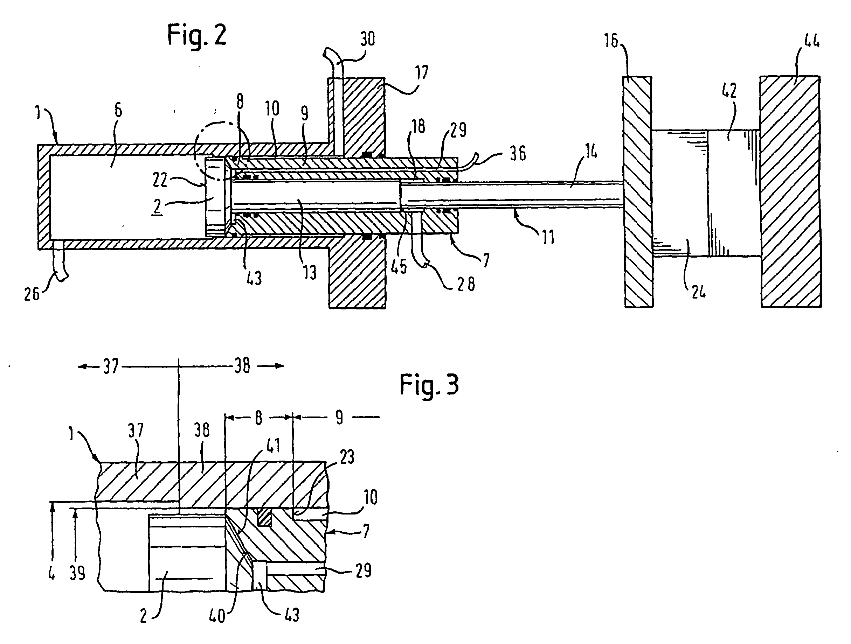

### ERSTES AUSFÜHRUNGSBEISPIEL (FIG.1-4)

Eine erste Ausführungsform der erfindungsgemäßen Hydraulikeinrichtung soll nachfolgend im Zusammenhang mit der Verwendung einer derartigen Hydraulikeinrichtung bei einer Schließeinheit einer Drei-Platten-Spritzgießmaschine erläutert werden (siehe Figuren 1 bis 4).

Ein Zylinder 1 weist einen ersten Abschnitt 37 mit einem ersten Innendurchmesser 4 und einen zweiten Abschnitt 38 mit einem zweiten Innendurchmesser 39 auf. In dem Zylinder 1 ist ein erster Druckraum 6 vorgesehen, in den eine Leitung 26 für ein Druckmedium mündet und in dem ein Hauptkolben 2 axial bewegbar ist. Nachfolgend sollen Leitungen, die für den Transport eines Druckmediums vorgesehen sind, der Einfachheit halber als Druckleitung oder allgemein als Leitung bezeichnet werden. Der Durchmesser 3 des Hauptkolbens 2 ist deutlich kleiner als der erste Innendurchmesser 4 und außerdem kleiner als der zweite Innendurchmesser 39 des Zylinders 1, so dass ein Ringspalt 5 gebildet wird. Damit wird ermöglicht, dass das Druckmedium, vorzugsweise ein Hydrauliköl, von der Vorderseite 22 des Hauptkolbens 2 zur Rückseite 20 und zurück fließen kann, so dass der Hauptkolben 2 in dem Hydrauliköl schwimmend ist. Desweiteren ist ein in dem zweiten Abschnitt 38 axial bewegbarer und arretierbarer Hilfskolben 7 vorgesehen, der zwei Abschnitte 8 und 9 aufweist.

Der Durchmesser des ersten Abschnitts 8 entspricht dem Innendurchmesser 39 im zweiten Abschnitt 38 des Zylinders 1, so dass der Hilfskolben 7 in diesem Bereich in dem Zylinder 1 verschieblich ist. Die Aufteilung des Zylinders 1 in zwei Abschnitte 37 und 38 erfolgt aus Kostengründen, da nur in dem von dem Hilfskolben 7 überstreichbaren Abschnitt 38 eine Oberflächenbehandlung erforderlich ist, die eine hydraulisch einwandfreie Dichtheit ergibt. Demgegenüber erfordert der Abschnitt 37 des Zylinders 1 keine besondere Oberflächenbehandlung. Der Durchmesser des zweiten Abschnitts 9 des Hilfskolbens 7 ist gegenüber dem ersten Abschnitt 8 reduziert, so dass rechts von der kreisringförmigen Rückseite 23 des Abschnitts 8 des Hilfskolbens 7 zwischen dem Hilfskolben 7 und dem Zylinder 1 ein ringspaltförmiger Druckraum 10 gebildet wird, in den eine Druckleitung 30 mündet. Der zweite Abschnitt 9 des Hilfskolbens 7 ragt durch eine Öffnung 19 in der rechten Wand 17 des Zylinders 1 teilweise nach außen. Der Zylinder 1 ist mit seiner rechten Wand 17 auf der Rückseite der Abstützplatte einer Drei-Platten-Schließeinheit befestigt oder die Abstützplatte 17 bildet selbst die rechte Wand des Zylinders 1.

Die Kolbenstange 11 des Hauptkolbens 2 weist ebenfalls zwei Abschnitte 13 und 14 mit jeweils unterschiedlichem Durchmesser auf. Der Durchmesser des ersten Abschnitts 13 entspricht dem Innendurchmesser einer zylindrischen Ausnehmung 12 in dem Hilfskolben 7, so dass die Kolbenstange 11 längsverschieblich in dem Hilfskolben 7 ist. Der zweite Abschnitt 14 weist einen kleineren Durchmesser als der Abschnitt 13 auf, ragt durch eine zylindrische Bohrung 15 in dem Hilfskolben 7 aus diesem heraus und ist mit der beweglichen Werkzeugaufspannplatte 16 verbunden. Zwischen der Innenwand der zylindrischen Ausnehmung 12 in dem Hilfskolben 7 und dem Außendurchmesser des Abschnitts 14 der Kolbenstange 11 wird somit ein ringspaltförmiger Druckraum 18 ausgebildet, an den eine Druckleitung 28 angeschlossen ist.

Wenn der Hauptkolben 2 mit dem Hilfskolben 7 in Kontakt kommt, berührt die Anschlagfläche 40 des Hauptkolbens 2 die Anschlagfläche 41 des Hilfskolbens 7. Die einander gegenüberliegenden Seiten 20 und 21 von Haupt- und Hilfskolben sind des weiteren so gestaltet, dass beim Aufeinanderliegen der Flächen 40 und 41 zwischen dem Hauptkolben 2 und dem Hilfskolben 7 eine kleiner Druckraum 43 gebildet wird, der über einen in dem Hilfskolben 7 verlaufenden Kanal 29 und eine Druckleitung 36 dekomprimiert werden kann. Der Hauptkolben 2 wirkt quasi als Ventil, das den kleinen Druckraum 43 verschließt.

In der ersten Ausführungsform der erfindungsgemäßen Hydraulikeinrichtung sind somit vier Druckräume vorgesehen:
1. Ein erster, großer Druckraum 6, in welchem der Hauptkolben 2 und der Hilfskolben 7 längsverschieblich sind,
2. Ein nur zeitweise vorhandener, zweiter Druckraum 43 zwischen der Rückseite 20 des Hauptkolbens 2 und der Vorderseite 21 des Hilfskolbens 7,
3. Ein dritter, ringspaltförmiger Druckraum 10 zwischen der Außenseite des Hilfskolbens 7 und dem Zylinder 1,
4. Ein vierter, ringspaltförmiger Druckraum 18 zwischen der Außenseite des Abschnitts 14 der Kolbenstange 11 und dem Innendurchmesser der zylindrischen Ausnehmung 12 in dem Hilfskolben 7.

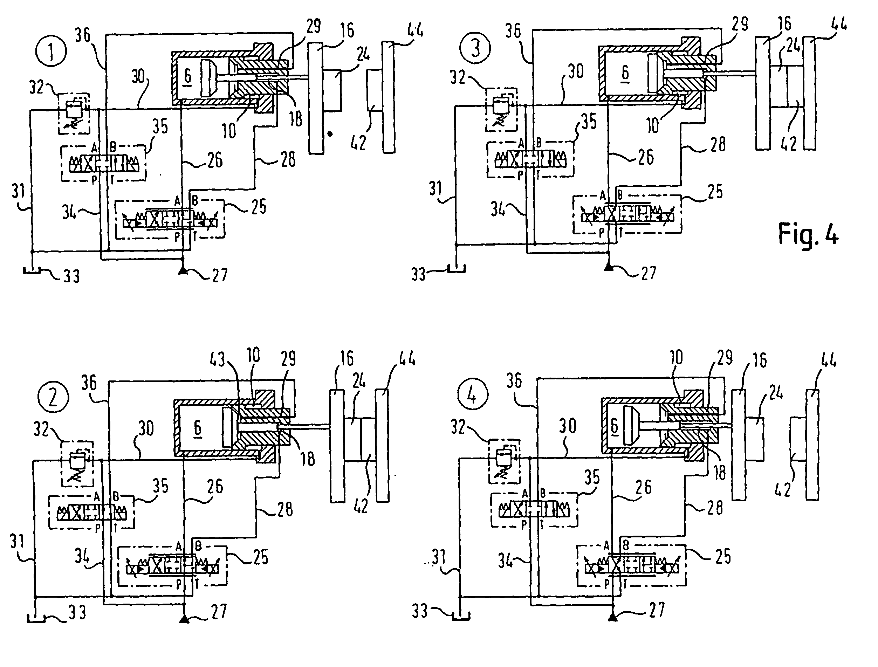

Die Funktionsweise der oben beschriebenen Hydraulikeinrichtung soll anhand des Schaltplans von Figur 4 erläutert werden.

### (1) Schließbewegung (Zufahren der Formhälften)

Das 4/3-Wegeventil 35 befindet sich in seiner mittleren Schaltstellung, so dass die in den Druckraum 10 mündende Druckleitung 30 und die in den Kanal 29 mündende Druckleitung 36 blockiert sind. Damit ist auch der Hilfskolben 7 hydraulisch blockiert und bleibt in seiner Position. Das 4/3-Wegeventil 25 befindet sich in seiner rechten Schaltstellung (DifferentialModus). Von der Druckmittelquelle 27 wird über die Druckleitung 26 Hydrauliköl in den Druckraum 6 befördert und der Hauptkolben 2 auf beiden Seiten 20 und 22 mit Druck beaufschlagt. Damit wird auf den Hauptkolben 2 eine nach rechts wirkende Kraft ausgeübt, die proportional dem Durchmesser des ersten Abschnitts 13 der Kolbenstange 11 ist. Diese Kraft bewirkt eine Bewegung des Hauptkolbens 2 nach rechts. Das dabei aus dem Druckraum 18 verdrängte Hydrauliköl wird über die Druckleitung 28 und das 4/3-Wegeventil 25 in die Druckleitung 26 eingespeist. Die Bewegung des Hauptkolbens 2 erfolgt somit mit einer großen Geschwindigkeit, erfordert aber nur einen kleine Menge an Hydrauliköl trotz der bei der Bewegung zurückgelegten großen Wegstrecke. Durch die Bewegung des Hauptkolbens 2 wird die bewegliche Werkzeugaufspannplatte 16 auf die feste Werkzeugaufspannplatte 44 zubewegt. Gegen Ende dieses Vorgangs stehen sich die Rückseite 20 des Hauptkolbens 2 und die Vorderseite 21 des Abschnitts des Hilfskolbens 7 unmittelbar gegenüber.

### (2) Verriegelung:

Sobald sich die Anschlagflächen 40 des Hauptkolbens 2 und 41 des Hilfskolbens 7 berühren und zwischen sich den Druckraum 43 gebildet haben, wird das 4/3-Wegeventil 35 in die rechte Schaltstellung umgeschaltet. Damit ist der Druckraum 43 über den Kanal 29 und die Druckleitung 36 an den Tank 33 angeschlossen und kann dekomprimiert werden. Über die Druckleitungen 34 und 30 wird Hydrauliköl in den Druckraum 10 befördert. Da nunmehr sowohl der Druckraum 10 als auch der Druckraum 6 mit Hydrauliköl versorgt und unter Druck gesetzt werden, werden der Hilfskolben 7 und der Hauptkolben 2 mit ihren Anschlagflächen 40 und 41 fest und hydraulisch dicht gegeneinander gedrückt. Damit - bei gleichem Druck in den Druckräumen 6 und 10 - die Flächen 40 und 41 fest gegeneinander gedrückt werden, muss der Ringspalt des Druckraums 10 stets größer sein als der Ringspalt 5 plus der Ringspalt des Druckraums 18. Da die Rückseite 20 des Hauptkolbens 2 nun nicht mehr vorhanden ist, wirkt das Hydrauliköl in dem Druckraum 6 nur noch auf die Vorderseite 22 des Hauptkolbens 2 und den nicht vom Hauptkolben abgedeckten, kreisringförmigen Abschnitt der Vorderseite 21 des Hilfskolbens 7. Damit wird auf die Einheit aus Hauptkolben 2 und Hilfskolben 7 eine Kraft ausgeübt, die proportional ist zu der im Druckraum 6 beaufschlagten Fläche, abzüglich der in die Gegenrichtung mit Hydrauliköl beaufschlagten kreisringförmigen Flächen 23 des Druckraums 10 sowie 45 des Druckraums 18. Zur Sicherheit ist ein Druckbegrenzungsventil 32 vorgesehen und auf einen Wert eingestellt, der geringfügig höher liegt als der nunmehr in den Druckräumen 6 und 10 erzeugte Verriegelungsdruck. Im Ergebnis wird bei der Verriegelung der Formhälften 24 und 42 nur eine sehr kleine Wegstrecke zurückgelegt und es wird eine große Kraft auf die Formhälften ausgeübt.

### (3) Entriegelung:

Sobald ein spritzgegossenes Kunststoffteil genügend abgekühlt ist und aus der Form 24, 42 entnommen werden kann, kann die Schließeinheit entriegelt werden. Hierzu wird das 4/3-Wegeventil 35 in die mittlere Schaltstellung gebracht und der Druckraum 10 hydraulisch blockiert. Das 4/3-Wegeventil 25 wird in die linke Schaltstellung umgeschaltet, so dass der Druckraum 6 über die Druckleitung 26 an den Tank 33 und der Druckraum 18 über die Druckleitung 28 an die Druckmittelquelle 27 angeschlossen sind. Damit wird der Druckraum 6 dekomprimiert, so dass sich der Hauptkolben 2 nach links bewegen kann. Da somit auch der auf den Hilfskolben 7 ausgeübte Druck nachlässt, wird sich dieser um eine kleine Stecke nach links bewegen, entsprechend der Ausdehnung des in dem Druckraum 10 eingeschlossenen Hydrauliköls.

### (4) Öffnungsbewegung (Öffnen der Formhälften)

Zum Auseinanderfahren der Formhälften 24 und 42 bleibt der Druckraum 6 über die Druckleitung 26 mit dem Tank 33 verbunden und somit druckentlastet. Dem Druckraum 18 wird über die Druckleitung 28 Hydrauliköl aus der Druckmittelquelle 27 zugeführt. Dies bewirkt eine Bewegung des Hauptkolbens 2 und der Kolbenstange 11 nach links, und zwar mit großer Geschwindigkeit, aber geringem Hydraulikölbedarf. Auf diese Weise wird die bewegliche Werkzeugaufspannplatte 16 nach links von der festen Werkzeugaufspannplatte 44 weggefahren.

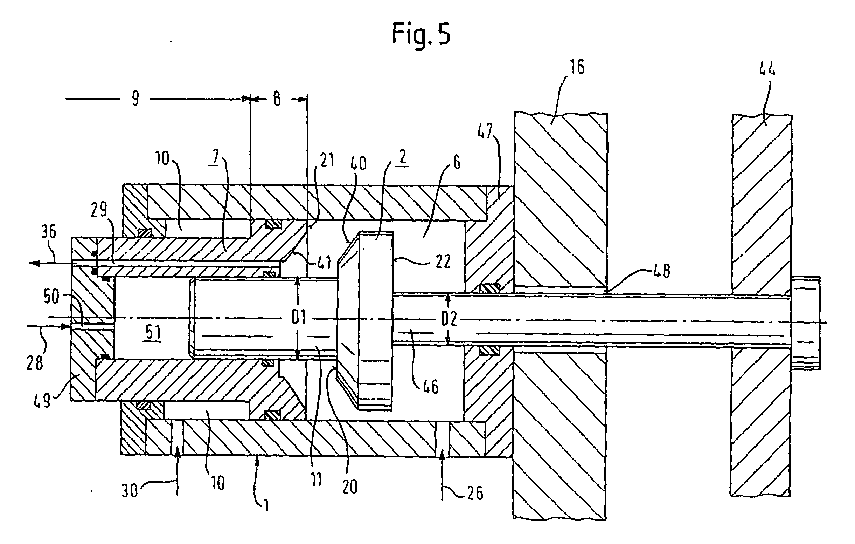

### ZWEITES AUSFÜHRUNGSBEISPIEL (FIG.5-8)

Eine zweite Ausführungsform der erfindungsgemäßen Hydraulikeinrichtung soll nachfolgend im Zusammenhang mit der Verwendung einer derartigen Hydraulikeinrichtung bei einer Schließeinheit einer Zwei-Platten-Spritzgießmaschine erläutert werden (siehe Figuren 5 bis 8). Zur Vermeidung von Wiederholungen soll nur auf die wesentlichen Unterschiede eingegangen werden. Gleiche Bezugszeichen bezeichnen gleiche Bauteile, so dass zu deren Verständnis auf die Beschreibung der ersten Ausführungsform verwiesen wird.

Der Zylinder 1 ist mit seiner rechten Wand 47 an der beweglichen Werkzeugaufspannplatte 16 einer Zwei-Platten-Schließeinheit einer Spritzgießmaschine befestigt. Der Hauptkolben 2 verfügt auf seiner Rückseite 20 über eine erste Kolbenstange 11 mit einem ersten Durchmesser D1 und auf seiner Vorderseite 22 über eine zweite Kolbenstange 46 mit einem zweiten Durchmesser D2, der kleiner ist als D1. Die zweite Kolbenstange 46 ragt aus der rechten Wand 47 des Zylinders 1 heraus, ist durch einen in der beweglichen Werkzeugaufspannplatte 16 vorgesehenen Durchbruch 48 mit einem Durchmesser größer als D2 geführt und an der feststehenden Werkzeugaufspannplatte 16 befestigt. Die erste Kolbenstange 11 weist einen einheitlichen Durchmesser D1 auf, der der zylindrischen Ausnehmung in dem Hilfskolben 7 entspricht, so dass die Kolbenstange 11 in dem Hilfskolben 7 verschiebbar ist. Der Hilfskolben 7 weist an seinem linken Ende eine Wand 49 mit einem Kanal 50 auf, an den eine Druckleitung 28 anschließbar ist, um dem Druckraum 51 in dem Hilfskolben 7 Hydrauliköl zu- oder abführen zu können. Dieser Druckraum 51 entspricht in seiner Funktion dem Druckraum 18 bei der ersten Ausführungsform.

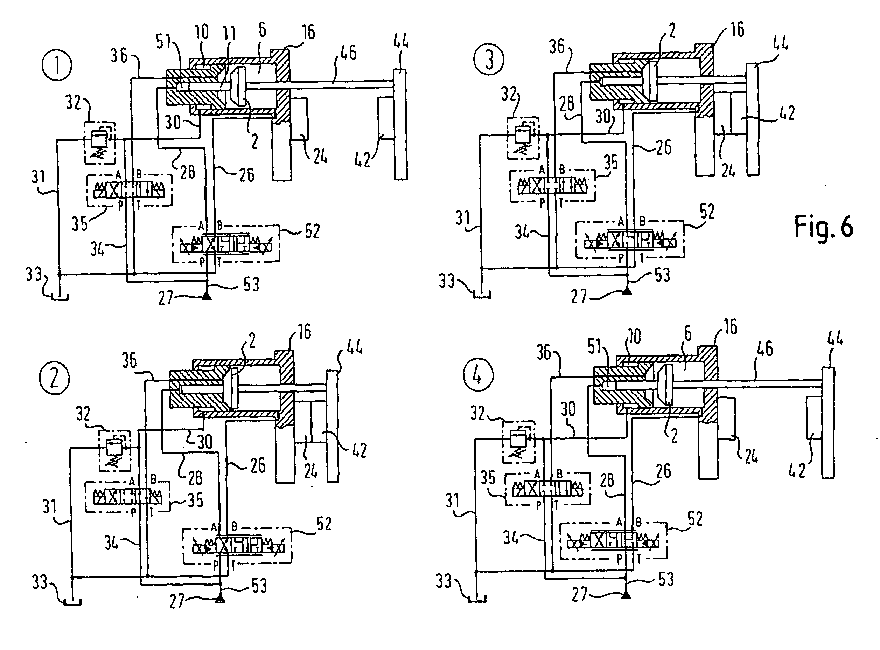

Die Funktionsweise dieser zweiten Ausführungsform soll anhand des Schaltplans von Figur 6 erläutert werden.

### (1) Schließbewegung (Zufahren der Formhälften)

Das 4/3-Wegeventil 35 befindet sich in seiner mittleren Schaltstellung, so dass der Hilfskolben 7 hydraulisch blockiert ist. Das 4/3-Wegeventil 52 befindet sich in seiner linken Schaltstellung, so dass der Druckraum 6 über die Leitung 26 mit Hydrauliköl versorgt wird. Der Druckraum 51 ist an den Tank 33 angeschlossen. Aufgrund des kleineren Durchmessers D2 der zweiten Kolbenstange 46 wird auf den Hauptkolben 2 eine Kraft nach links ausgeübt. Da die Kolbenstange an der feststehenden Werkzeugaufspannplatte 44 befestigt ist, wird der Zylinder 1 mit dem Hilfskolben 7 nach rechts auf den Hauptkolben zubewegt und die Formhälften 24 und 42 zugefahren. Gegen Ende dieses Vorgangs stehen sich die Rückseite 20 des Hauptkolbens 2 und die Vorderseite 21 Hilfskolbens 7 gegenüber.

### (2) Verriegelung:

Sobald sich die Anschlagfläche 40 des Hauptkolbens 2 und die Anschlagfläche 41 des Hilfskolbens 2 berühren und zwischen sich den Druckraum 43 gebildet haben, wird das 4/3-Wegeventil 35 in die rechte Schaltstellung umgeschaltet. Damit ist der Druckraum 43 über den Kanal 29 und die Druckleitung 36 an den Tank 33 angeschlossen und kann dekomprimiert werden. Über die Druckleitungen 53, 34 und 30 wird Hydrauliköl in den Druckraum 10 befördert. Das 4/3-Wegeventil 52 bleibt in seiner linken Schaltstellung, so dass der Druckraum 6 weiterhin über die Druckleitungen 53 und 26 mit Hydrauliköl versorgt wird. Da nunmehr sowohl der Druckraum 10 als auch der Druckraum 6 mit Hydrauliköl versorgt und unter Druck gesetzt werden, werden der Hilfskolben 7 und der Hauptkolben 2 mit ihren Anschlagflächen 40 und 41 fest und hydraulisch dicht gegeneinander gedrückt. Da die Rückseite des Hauptkolbens 2 nun nicht mehr vorhanden ist, wirkt das Hydrauliköl in dem Druckraum 6 nur noch auf die Vorderseite 22 des Hauptkolbens 2 und den nicht vom Hauptkolben abgedeckten, kreisringförmigen Abschnitt der Vorderseite 21 des Hilfskolbens 7. Damit wird die Schließeinheit mit einer großen Kraft über eine kleine Wegstrecke verfahren, vollständig geschlossen und zugehalten.

### (3) Entriegelung:

Sobald ein spritzgegossenes Kunststoffteil genügend abgekühlt ist und aus der Form 24, 42 entnommen werden kann, kann die Schließeinheit entriegelt werden. Hierzu wird das 4/3-Wegeventil 35 in die mittlere Schaltstellung gebracht und der Druckraum 10 hydraulisch blockiert. Das 4/3-Wegeventil 52 wird in die mittlere Schaltstellung umgeschaltet, so dass der sowohl der Druckraum 6 über die Druckleitung 26 als auch der Druckraum 51 über die Druckleitung 28 an den Tank 33 angeschlossen sind. Damit werden der Druckraum 6 und der Druckraum 51 dekomprimiert.

### (4) Öffnungsbewegung (Öffnen der Formhälften)

Zum Auseinanderfahren der Formhälften 24 und 42 wird das 4/3-Wegeventil 52 in die rechte Schaltstellung gebracht und der Druckraum 51 im Differentialmodus mit Hydrauliköl befüllt. Dies bewirkt eine Bewegung des Zylinders 1 und des Hilfskolbens 7 nach links, denn der Hauptkolbens 2 ist mit seiner zweiten Kolbenstange 46 an der festen Werkzeugaufspannplatte 44 befestigt. Diese Öffnungsbewegung erfolgt mit großer Geschwindigkeit, aber geringem Hydraulikölbedarf. Auf diese Weise wird die bewegliche Werkzeugaufspannplatte 16 von der feststehenden Werkzeugaufspannplatte 44 weg gefahren.

Bei einer Zwei-Platten-Schließeinheit hat der Anwender die Freiheit, an welcher der Werkzeugaufspannplatten die erfindungsgemäße Hydraulikeinrichtung angebracht werden soll.

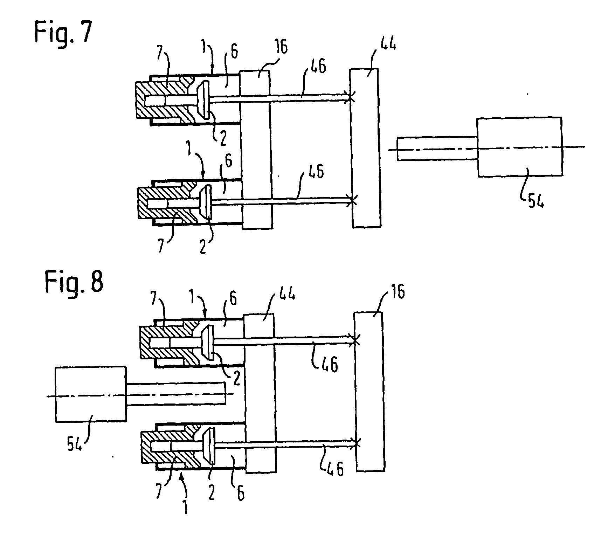

Eine erste Möglichkeit besteht darin, wie oben beschrieben und in Figur 7 nochmals schematisch gezeigt, den Zylinder 1 an der beweglichen Werkzeugaufspannplatte 16 und den Hauptkolben 2 mit seiner zweiten Kolbenstange 46 an der festen Werkzeugaufspannplatte 44 zu befestigen. Alternativ dazu kann, wie dies in Figur 8 schematisch dargestellt ist, der Zylinder 1 an der feststehenden Werkzeugaufspannplatte 44 und der Hauptkolben 2 mit seiner zweiten Kolbenstange 46 an der beweglichen Werkzeugaufspannplatte 16 befestigt werden. Die Einspritzeinheit 54 ist in beiden Fällen wie üblich der feststehenden Werkzeugaufspannplatte 44 zugeordnet.

### DRITTES AUSFÜHRUNGSBEISPIEl (FIG.9-13)

Eine dritte Ausführungsform der erfindungsgemäßen Hydraulikeinrichtung soll nachfolgend anhand der Figuren 9 bis 12 und in einer Variante anhand der Figur 13 im Zusammenhang mit einer Drei-Platten-Schließeinheit einer Spritzgießmaschine beschrieben werden. Zur Vermeidung von Wiederholungen soll nur auf die wesentlichen Unterschiede zu der ersten Ausführungsform eingegangen werden. Gleiche Bezugszeichen bezeichnen gleiche Bauteile, so dass zu deren Verständnis auf die Beschreibung der ersten Ausführungsform verwiesen wird.

Ein oder - wie hier gezeigt - zwei Zylinder 1 sind an der Abstützplatte 17 einer Drei-Platten-Schließeinheit befestigt, die desweiteren noch die bewegliche Werkzeugaufspannplatte 16 mit einer ersten Formhälfte 24 und die feststehende Werkzeugaufspannplatte 44 mit einer zweiten Formhälfte 42 umfasst. Die Abstützplatte 17 weist im Bereich der Zylinder 1 Durchbrüche 55 auf, durch die die Hilfskolben 7 der beiden Zylinder 1 hindurch frei bewegbar sind. Ausserdem ist ein Zusatzzylinder 56 an der Abstützplatte 17 befestigt, dessen Kolbenstange 57 an der beweglichen Werkzeugaufspannplatte 16 angebracht ist. Im vorliegenden Beispiel ist der Zusatzzylinder 56 als Differentialzylinder ausgebildet. Links von dem Kolben 58 wird ein erster Zusatzdruckraum 59 und rechts von dem Kolben 58 (auf der Seite der Kolbenstange 57) wird ein zweiter Zusatzdruckraum 60 gebildet. Eine erste Verbindungsleitung 61 verbindet den ersten Zusatzdruckraum 59 mit der an die Druckräume 10 angeschlossenen Druckleitung 30. Über eine zweite Verbindungsleitung 62 ist der zweite Zusatzdruckraum 60 an das 4/3-Wegeventil 63 angeschlossen. Desweiteren sind Sensoren 64 und 65 vorgesehen, mit denen der Kontakt zwischen den Anschlagflächen 40 und 41 erfasst wird. Im vorliegenden Beispiel handelt es sich um Mikrophone, die das beim Aufeinandertreffen erzeugte akustische Signal erfassen. Desweiteren ist ein Positionssensor 75 vorgesehen, mit dem die Position der beweglichen Werkzeugaufspannplatte gemessen werden kann, beispielsweise um positionsabhängig eine Änderung der Verfahrgeschwindigkeit einzuleiten.

Die Funktionsweise dieser dritten Ausführungsform soll anhand der hydraulischen Schaltpläne der Figuren 9 bis 12 erläutert werden.

### (1) Schließbewegung (Zufahren der Formhälften) gemäß Figur 9

Das 4/2-Wegeventil 66 befindet sich in seiner linken Schaltstellung und die Druckräume 6 in den beiden Zylindern 1 sind hydraulisch blockiert. Das 4/3-Wegeventil 63 befindet sich in der rechten Schaltstellung und die beiden Druckräume 10 in den Zylindern 1 werden von der Druckmittelquelle 27 mit Hydrauliköl versorgt. Desweiteren werden die beiden Zusatzdruckräume 59 und 60 mit Hydrauliköl versorgt und der Zusatzzylinder im Differentialmodus betrieben. Der Zusatzzylinder 56 treibt die bewegliche Werkzeugaufspannplatte 16 nach rechts auf die feststehende Werkzeugaufspannplatte 44 zu. Zusätzlich wird auf die bewegliche Werkzeugaufspannplatte 16 eine Kraft von den Kolbenstangen 11 der Hauptkolben 2 ausgeübt, die sich dadurch ergibt, dass die Hilfskolben 7 unter der Wirkung des in die Druckräume 10 geförderten Hydrauliköls nach links in die Druckräume 6 bewegt werden, dass aber das Volumen in den Druckräumen 6 unveränderlich ist und deshalb die Kolbenstangen 11 nach rechts aus den Druckräumen 6 hinausgetrieben werden. Im Ergebnis addieren sich also die von der Kolbenstange 57 des Zusatzzylinders 56 und den Kolbenstangen 11 der beiden Zylinder 1 erzeugten und auf die bewegliche Werkzeugaufspannplatte 16 ausgeübten Kräfte. Gegen Ende der Schließbewegung stehen sich in den beiden Zylindern 1 jeweils die Rückseite 20 des Hauptkolbens 2 und die Vorderseite 21 des Hilfskolbens 7 gegenüber.

### (2) Verriegelung gemäß Figur 10

Wenn die Anschlagflächen 40 und 41 von Haupt- und Hilfskolben aufeinanderstossen, wird das dabei erzeugte akustische Signal von den Mikrophonen 64 und 65 detektiert und die Dekomprimierung des nun zwischen dem Hauptkolben 2 und dem Hilfskolben 7 entstandenen Druckraums 43 eingeleitet. Hierzu wird das 4/3-Wegeventil 67 in die rechte Schaltstellung gebracht, so dass jeder Druckraum 43 über den jeweiligen Kanal 29, die Verbindungsleitungen 68 und 69 sowie die Druckleitung 36 an den Tank 33 angeschlossen ist. Einen kurzen Augenblick später wird das 4/2-Wegeventil 66 in die rechte Schaltstellung gebracht. Das 4/3-Wegeventil 63 bleibt unverändert, das heißt in seiner rechten Schaltstellung. Auf diese Weise wird von der Druckmittelquelle 27 Hydrauliköl über die Druckleitung 34, die Verbindung P-A in der rechten Schaltstellung des 4/3-Wegeventils 67, die Druckleitung 72 und die Verzweigung P-A,B in der rechten Schaltstellung des 4/2-Wegeventils 66 jeweils in den Druckraum 6 der beiden Zylinder 1 gefördert und die beiden Hauptkolben 2 werden mit Druck beaufschlagt. Der Hauptkolben 2 wird fest gegen den Hilfskolben 7 gedrückt und zusammen mit diesem nach rechts aus dem Zylinder 1 herausbewegt. Unterstützt wird diese Verriegelung durch den Zusatzzylinder 56, der ebenfalls mit Hydrauliköl versorgt wird. Mit einem Drucksensor 76 kann der in den Druckräumen 6 erzeugte Druck gemessen und durch Variation der Förderleistung an der Druckmittelquelle erhöht oder erniedrigt werden, um die Schließkraft in geeigneter Weise anzupassen.

### (3) Entriegelung gemäß Figur 11

Zur Entriegelung wird das 4/3-Wegeventil 67 in die mittlere Schaltstellung gebracht, so dass jeder Druckraum 6 über die Druckleitungen 70, 71, das 4/2-Wegeventil 66, die Druckleitung 72 und das 4/3-Wegeventil 67 an den Tank 33 angeschlossen ist. Über das 4/3-Wegeventil 63 und die Druckleitungen 30, 61 und 74 werden die Druckräume 10 sowie der Zusatzzylinder 56 weiterhin mit Hydrauliköl versorgt. Die Formhälften 24 und 42 werden mit einer geringen Kraft gerade noch zugehalten. Daher kann die Entriegelung schon während der Abkühlphase erfolgen, in der das gerade spritzgegossene Kunststoffteil nur noch in der Form gehalten werden muss.

### (4) Öffnungsbewegung (Öffnen der Formhälften) gemäß Figur 12

Wenn das fertige Kunststoffteil genügend abgekühlt ist und aus der Form 24,42 entnommen werden kann, werden die Formhälften 24 und 42 auseinander gefahren. Das 4/2-Wegeventil 66 wird in die linke Schaltstellung gebracht, in der der Druckraum 6 in jedem der Zylinder 1 hydraulisch blockiert ist. Das 4/3-Wegeventil 63 wird in die linke Schaltstellung gebracht, in der A mit T und P mit B verbunden ist, so dass der Zusatzdruckraum 60 mit Hydrauliköl versorgt wird und der Zusatzdruckraum 59 sowie die beiden Druckräume 10 an den Tank 33 angeschlossen und damit druckentlastet sind. Der Kolben 58 des Zusatzzylinders 56 wird nach links bewegt und zieht die bewegliche Werkzeugaufspannplatte 16 von der feststehenden Werkzeugaufspannplatte 44 weg. Damit wird gleichzeitig in den Zylindern 1 die jeweilige Kolbenstange 11 des Hauptkolbens 2 in den Zylinder 1 hineingedrückt. Da der Druckraum 6 hydraulisch blockiert ist, wird der Hilfskolben 7 automatisch aus dem Zylinder 1 herausgedrängt, und zwar um eine solche Strecke, dass das Volumen im Druckraum 6 unverändert bleibt.

In der Figur 13 ist eine Variante des dritten Ausführungsbeispiels dargestellt. Zusatzlich zu dem an der Abstützplatte 17 befestigten Zusatzzylinder 56 kann an der feststehenden Werkzeugaufspannplatte 44 ein weiterer Zusatzzylinder 56' vorgesehen werden, dessen Kolbenstange 57' an der beweglichen Werkzeugaufspannplatte 16 angreift. Mit dieser Anordnung ist der Vorteil verbunden, dass für die Öffnungsbewegung die der Kolbenstange 57' abgewandte größere Fläche des Kolbens 58' mit Hydrauliköl beaufschlagt werden kann. Damit kann gerade zum Aufreissen der Formhälften eine vergleichsweise große Kraft zur Verfügung gestellt werden. Dieser weitere Zusatzzylinder 56' ist ausserdem hydraulisch so geschaltet, dass er für die Schließbewegung abgeschaltet ist oder dass der kleinere Druckraum 60' mit der Druckmittelquelle 27 verbunden ist. Mittels der Druckleitungen 61' und 74' ist der weitere Zusatzzylinder über einen separaten Hydraulikkreis betreibbar oder in geeigneter Weise an den vorhanden Hydraulikkreis angeschlossen, dass er in der zuvor genannten Weise betrieben werden kann.

Nicht dargestellt ist die Variante, dass in der Figur 13 nur an der feststehenden Werkzeugaufspannplatte 44 ein oder mehrere Zusatzzylinder 56' und an der Abstützplatte 17 nur die erfindungsgemäßen Hydraulikeinrichtungen 1 vorgesehen sind.

### VIERTES AUSFÜHRUNGSBEISPIEL (FIG.14 - 18)

Eine vierte Ausführungsform der erfindungsgemäßen Hydraulikeinrichtung soll nachfolgend anhand der Figuren 14 und 17 im Zusammenhang mit einer Zwei-Platten-Schließeinheit einer Spritzgießmaschine beschrieben werden. Zur Vermeidung von Wiederholungen soll nur auf die wesentlichen Unterschiede zu der zweiten Ausführungsform eingegangen werden. Gleiche Bezugszeichen bezeichnen gleiche Bauteile, so dass zu deren Verständnis auf die Beschreibung der zweiten Ausführungsform verwiesen wird. In der ersten Variante (Fig. 14 bis 17) sind die erfindungsgemäße Hydraulikeinrichtung sowie ein Zusatzzylinder an der feststehenden Werkzeugaufspannplatte befestigt. Für diese Variante ist in den Figuren 14 bis 17 der Hydrautikschaltplan in den verschiedenen Phasen des Spritzgießzyklus dargestellt. In der zweiten Variante (Fig. 18) ist die erfindungsgemäße Hydraulikeinrichtung an der beweglichen Werkzeugaufspannplatte und ein Zusatzzylinder an der feststehenden Werkzeugaufspannplatte befestigt. Der Hydraulikschaltplan zeigt die Situation im ausgeschalteten Zustand.

Gemäß Figur 14 ist der Zylinder 1 an der feststehenden Werkzeugaufspannplatte 44 befestigt und die weitere Kolbenstange 46 ist durch die feststehende Werkzeugaufspannplatte 44 hindurchgeführt und an der beweglichen Werkzeugaufspannplatte 16 befestigt. Die Ausnehmung 12 in dem Hilfszylinder 7 ist an ihrem dem Hauptkolben 2 abgewandten Ende offen, so dass die Kolbenstange 11 in der Ausnehmung 12 drucklos bewegbar ist. Desweiteren ist an der feststehenden Werkzeugaufspannplatte 44 ein Zusatzzylinder 56 angebracht, dessen Kolbenstange 57 durch die feststehende Werkzeugaufspannplatte 44 hindurchgeführt und an der beweglichen Werkzeugaufspannplatte 16 befestigt ist. Zum Schließen wird der kleinere Zusatzdruckraum 60 an eine Druckmittelquelle 27 angeschlossen, wohingegen für die Öffnungsbewegung der größere Zusatzdruck 59 an eine Druckmittelquelle 27 angeschlossen wird. Mittels Drucksensoren 76 kann in den Druckräumen 6 und 10 der Druck gemessen und überwacht werden. Mittels eines Positionssensors 75 kann die aktuelle Position der beweglichen Werkzeugaufspannplatte 16 gemessen und von der Maschinensteueurung ausgewertet werden.

### (1) Schließbewegung (Zufahren der Formhälften) gemäß Figur 14

Zum Zufahren der Formhälften 24, 42 wird der Druckraum 6 hydraulisch blockiert und die dritte Druckkammer 10 an die Druckmittelquelle 27 angeschlossen. Der Zusatzzylinder 56 kann - wie hier dargestellt ist - bedarfsweise zugeschaltet und ebenfalls mit Druckmittel versorgt werden und zwar in der Weise, dass der kleine Zusatzdruckraum 60 mit Hydrauliköl versorgt wird. Dadurch, dass das Volumen in dem Druckraum 6 konstant ist, wird in dem Maße, in dem der Hilfskolben 7 nach rechts bewegt wird, der Hauptkolben 2 nach links verschoben. Die bewegliche Werkzeugaufspannplatte 16 wird zu der feststehenden Werkzeugaufspannplatte 44 bewegt. Gegen Ende der Schließbewegung stehen sich die Rückseite 20 des Hauptkolbens 2 und die Vorderseite 21 des Hilfskolbens 7 gegenüber.

### (2) Verriegelung gemäß Figur 15

Wenn die Anschlagflächen 40 und 41 von Haupt- und Hilfskolben aufeinanderstossen, wird das dabei erzeugte akustische Signal detektiert und die Dekomprimierung des nun zwischen dem Hauptkolben 2 und dem Hilfskolben 7 entstandenen Druckraums 43 eingeleitet. Nun wird der Hauptkolben 2 fest gegen den Hilfskolben 7 gedrückt. Durch Zuleitung von Hydrauliköl in den Druckraum 6, sowie weiterhin in den Druckraum 10, werden der Hauptkolben 2 und der Hilfskolben 7 als Einheit nach links aus dem Zylinder 1 herausbewegt. Die Verriegelung kann - wie hier dargestellt ist - bedarfsweise durch den Zusatzzylinder 56 unterstützt werden. Mit einem Drucksensor 76 kann der in dem Druckraum 6 erzeugte Druck gemessen und durch Variation der Förderleistung an der Druckmittelquelle 27 erhöht oder erniedrigt werden, um die Schließkraft in geeigneter Weise anzupassen.

### (3) Entriegelung gemäß Figur 16

Zur Entriegelung wird der Druckraum 6 an den Tank 33 angeschlossen und druckentlastet. Wenn der Zusatzzylinder 56 zugeschaltet ist, werden die Fomhälften 24 und 42 noch mit einer kleinen Kraft zugehalten.

### (4) Öffnungsbewegung (Öffnen der Formhälften) gemäß Figur 17

Wenn das fertige Kunststoffteil genügend abgekühlt ist und aus der Form 24,42 entnommen werden kann, werden die Formhälften 24 und 42 auseinander gefahren. Hierzu wird der Druckraum 6 hydraulisch blockiert. Der größere Zusatzdruckraum 59 wird mit Hydrauliköl versorgt. Der kleinere Zusatzdruckraum 60 und der Druckraum 10 werden an den Tank 33 angeschlossen. Der Kolben 58 des Zusatzzylinders 56 wird nach rechts bewegt und die bewegliche Werkzeugaufspannplatte 16 wird von der feststehenden Werkzeugaufspannplatte 44 wegbewegt. Gleichzeitig wird in dem Zylinder 1 die Kolbenstange 11 des Hauptkolbens 2 aus dem Hilfskolben 7 herausgezogen. Da der Druckraum 6 hydraulisch blockiert ist, wird der Hilfskolben 7 automatisch aus dem Zylinder 1 nach links herausgedrängt, und zwar um eine solche Strecke, dass das Volumen im Druckraum 6 unverändert bleibt.

In der Variante der vierten Ausführungsform gemäß der Figur 18 ist der Zusatzzylinder 56 wie schon zuvor an der feststehenden Werkzeugaufspannpaltte 44 angebracht und dessen Kolbenstange 57 mit der beweglichen Werkzeugaufspannplatte 16 verbunden. Der Zylinder 1 der erfindungsgemäßen Hydraulikeinrichtung ist hingegen an der beweglichen Werkzeugaufspannplatte 16 befestigt, und die Kolbenstange 46 ist durch die bewegliche Werkzeugaufspannplatte 16 hindurchgeführt und an der feststehenden Werkzeugaufspannplatte 44 befestigt. Die Funktionsweise ist wie oben beschrieben mit dem Unterschied, dass die bewegliche Werkzeugaufspannplatte 16 zusammen mit dem Zylinder 1 nach rechts auf die feststehende Werkzeugaufspannplatte 44 zu oder nach links von dieser wegbewegt wird, wohingegen der Hauptkolben 2 mit seinen beiden Kolbenstangen 11 und 46 ortsfest bleibt. Der Einfachheit halber zeigt das Hydraulikschema die Schließeinheit in ausgeschaltetem Zustand.

Die Ausführungsbeispiele drei und vier mit dem Zusatzzylinder haben gegenüber den vergleichbaren Ausführungsbeispielen eins und zwei ohne Zusatzzylinder den Vorteil, dass sowohl zum Schließen als auch zum Öffnen der Fomhälften nur sehr wenig Hydrauliköl benötigt wird. Dies liegt daran, dass kleine Bewegungen des Hilfskolbens 7 zu vergleichsweise großen Volumenänderungen in dem Druckraum 6 führen würden und somit - da der Druckraum 6 blockiert ist - die Kolbenstange 11 des Hauptkolbens 2 über große Strecken bewegt wird.

Im übrigen können die Schließeinheiten gemäß den Figuren 9 bis 18 auch so betrieben werden, dass die Zusatzzylinder nur für die Öffnungsbewegung mit Hydrauliköl versorgt werden und ansonsten ausgeschaltet sind.

In allen Ausführungsbeispielen erfolgt das Einstellen der lichten Höhe zwischen den Werkzeugaufspannplatten und somit das Einstellen der Formhöhe, indem der Druckraum 10 durch Füllen mit Hydrauliköl vergrößert oder durch Ablassen von Hydrauliköl verkleinert wird. In gleichem Maß muss auch das Volumen im Druckraum 6 angepasst werden. Zu diesem Zweck werden die Formhälften 24, 42 auf Anschlag gefahren, gegebenenfalls bis auf einen kleinen Spalt und der Hauptkolben 2 und der Hilfskolben 7 werden in dieser Position auf Anschlag gebracht. Damit sind die Volumina im ersten Druckraum 6 und im dritten Druckraum 10 festgelegt. In den ersten beiden Ausführungsbeispielen ist der dritte Druckraum 10 während der Schließ- und der Öffnungsbewegung blockiert. Demgegenüber ist beim dritten und vierten Ausführungsbeispiel der erste Druckraum 6 während der Schließ- und der Öffnungsbewegung hydraulisch blockiert.

### Bezugszeichenliste

- 1: Zylinder
- 2: Hauptkolben
- 3: Durchmesser des Hauptkolbens 2
- 4: Erster Innendurchmesser des Zylinders 1
- 5: Ringspalt
- 6: Erster Druckraum
- 7: Hilfskolben
- 8: Erster Abschnitt des Hilfskolbens 7
- 9: Zweiter Abschnitt des Hilfskolbens 7
- 10: Ringspaltförmiger Druckraum (dritter Druckraum)
- 11: Kolbenstange des Hauptkolbens 2
- 12: Zylindrische Ausnehmung im Hilfskolben 7
- 13: Erster Abschnitt der Kolbenstange 11
- 14: Zweiter Abschnitt der Kolbenstange 11
- 15: Zylindrische Bohrung
- 16: Bewegliche Werkzeugaufspannplatte
- 17: Abstützplatte und rechte Wand des Zylinders 1
- 18: Ringspaltförmiger Druckraum (vierter Druckraum)
- 19: Öffnung in der Abstützplatte bzw. der rechten Wand der Zylinders 1
- 20: Rückseite des Hauptkolbens 2
- 21: Vorderseite des Hilfskolbens 7
- 22: Vorderseite des Hauptkolbens 2
- 23: Kreisringförmige Rückseite des Abschnitts 8 des Hilfskolbens 7
- 24: Erste Formhälfte
- 25: Erstes 4/3-Wegeventil
- 26: Leitung für Druckmedium
- 27: Druckmittelquelle
- 28: Druckleitung
- 29: Kanal im Hilfskolben 7
- 30: Druckleitung
- 31: Druckleitung
- 32: Druckbegrenzungsventil
- 33: Tank
- 34: Druckleitung
- 35: Zweites 4/3-Wegeventil
- 36: Druckleitung
- 37: Erster Abschnitt des Zylinders 1
- 38: Zweiter Abschnitt des Zylinders 1
- 39: Zweiter Innendurchmesser des Zylinders 1
- 40: Anschlagfläche des Hauptkolbens 2
- 41: Anschlagfläche des Hilfskolbens 7
- 42: Zweite Formhälfte
- 43: Druckraum zwischen Hauptkolben und Hilfskolben (zweiter Druckraum)
- 44: Feste Werkzeugaufspannplatte
- 45: Kreisringförmige Fläche an der Stufe der Abschnitte 13 und 14 der Kolbenstange 11
- 46: Zweite Kolbenstange des Hauptkolbens 2
- 47: Rechte Wand des Zylinders 1
- 48: Durchbruch in der feststehenden Werkzeugaufspannplatte
- 49: Linke Wand des Hilfskolbens 7
- 50: Kanal in der linken Wand 49
- 51: Druckraum im Hilfskolben 7
- 52: 4/3-Wegeventil mit einer Differentialstellung und einer zentralen Dekompressionsstellung
- 53: Druckleitung
- 54: Einspritzeinheit
- 55: Durchbruch
- 56: Zusatzzylinder (auch 56')
- 57: Kolbenstange des Zusatzzylinders (auch 57')
- 58: Kolben des Zusatzzylinders (auch 58')
- 59: Erster, großer Zusatzdruckraum (auch 59')
- 60: Zweiter, kleiner Zusatzdruckraum (auch 60')
- 61: Erste Verbindungsleitung (auch 61')
- 62: Zweite Verbindungsleitung
- 63: 4/3-Wegeventil
- 64: Mikrophon
- 65: Mikrophon
- 66: 4/2-Wegeventil
- 67: 4/3-Wegeventil
- 68: Dritte Verbindungsleitung
- 69: Vierte Verbindungsleitung
- 70: bis 74 und 74': Druckleitungen
- 75: Positionssensor
- 76: Drucksensor

## Patentansprüche

1. Hydraulikeinrichtung zum Hin- und Herbewegen sowie zum Verriegeln eines Maschinenteils, insbesondere zum Öffnen, Schließen und Zuhalten der Formhälften eines Spritzgießwerkzeugs in einer Spritzgießmaschine, mit einem Zylinder (1), in dem ein erster Druckraum (6) mit einem Druckmedium vorgesehen ist, mit einem ersten Hauptkolben (2), wobei der Hauptkolben (2) eine oder mehrere Kolbenstangen (11) aufweist und in dem im ersten Druckraum (6) befindlichen Druckmedium schwimmen kann, sowie mit einem zweiten in dem Zylinder (1) axial bewegbaren Hilfskolben (7), **dadurch gekennzeichnet, dass** der Hilfskolben (7) Ausnehmungen (12) aufweist, in denen die Kolbenstangen (11) des Hauptkolbens (2) verschiebbar sind, und dass die sich gegenüberliegenden Seiten von Hauptkolben (2) und Hilfskolben (7) auf Anschlag bringbare Flächen (40, 41) aufweisen.

2. Hydraulikeinrichtung nach Anspruch 1, **dadurch gekennzeichnet, dass** die sich gegenüberliegenden Seiten von Hauptkolben (2) und Hilfskolben (7) derart gestaltet sind, dass bei sich berührenden Anschlagflächen (40, 41) zwischen dem Hauptkolben (2) und dem Hilfskolben (7) ein zweiter Druckraum (43) gebildet wird, und dass ein in diesen Druckraum (43) mündender Kanal (29) zum Dekomprimieren des in diesem Druckraum (43) eingeschlossenen Druckmediums vorgesehen ist.

3. Hydraulikeinrichtung nach Anspruch 2, **dadurch gekennzeichnet, dass** in dem zwischen dem Hauptkolben (2) und dem Hilfskolben (7) gebildeten zweiten Druckraum (43) ein Unterdruck erzeugbar ist.

4. Hydraulikeinrichtung nach einem der Ansprüche 1 bis 3, **dadurch gekennzeichnet, dass** die Anschlagfläche (40) des Hauptkolbens (2) und die Anschlagfläche (41) des Hilfskolbens (7) konisch ausgebildet sind.

5. Hydraulikeinrichtung nach einem der Ansprüche 1 bis 4, **dadurch gekennzeichnet, dass** der Hilfskolben (7) einen ersten, an der Innenwand des Zylinders (1) gleitenden Abschnitt (8) aufweist, der auf seiner dem Hauptkolben (2) zugewandten Seite (21) den ersten Druckraum (6) begrenzt, und dass der Hilfskolben (7) desweiteren einen sich an den ersten Abschnitt (8) anschließenden, zweiten Abschnitt (9) aufweist, dessen Durchmesser kleiner ist als der Innendurchmesser des Zylinders (1) in diesem Bereich, so dass ein dritter, ringspaltförmiger Druckraum (10) zwischen dem Zylinder (1) und dem Hilfskolben (7) gebildet wird.

6. Hydraulikeinrichtung nach einem der Ansprüche 1 bis 5, **dadurch gekennzeichnet, dass** der Zylinder (1) einen ersten Abschnitt (37) mit einem ersten Innendurchmesser (4) und einen zweiten Abschnitt (38) mit einem zweiten Innendurchmesser (39) besitzt, dass der vom Hilfskolben (7) bei seiner Bewegung überstrichene Bereich innerhalb des zweiten Abschnitts (38) liegt und dass nur der zweite Abschnitt (38) eine Oberfläche aufweist, die hydraulischen Anforderungen genügt.

7. Hydraulikeinrichtung nach einem der Ansprüche 1 bis 6, **dadurch gekennzeichnet, dass** der zweite Abschnitt (9) des Hilfskolbens (7) teilweise aus dem Zylinder (1) herausragt.

8. Hydraulikeinrichtung nach einem der Ansprüche 1 bis 7, **dadurch gekennzeichnet, dass** die Kolbenstange (11) des Hauptkolbens (2) einen ersten, in der Ausnehmung (12) gleitenden Abschnitt (13) aufweist, dass die Kolbenstange (11) desweiteren einen sich an den ersten Abschnitt (13) anschließenden zweiten Abschnitt (14) mit einem kleineren Durchmesser als der erste Abschnitt (13) aufweist, so dass ein vierter, ringspaltförmiger Druckraum (18) zwischen dem Abschnitt (14) der Kolbenstange (11) und dem Hilfskolben (7) gebildet wird, und dass der zweite Abschnitt (14) durch eine Bohrung (15) am werkzeugseitigen Ende der Ausnehmung (12) des Hilfskolbens (7) hindurchgeführt ist.

9. Hydraulikeinrichtung nach einem der Ansprüche 1 bis 8, **dadurch gekennzeichnet, dass** der Zylinder (1) an seinem dem bewegten Maschinenteil (16) zugewandten Ende ein Endstück (17) aufweist, das als Abstützplatte einer Drei-Platten-Schließeinheit einer Spritzgießmaschine ausgebildet ist und dass die Kolbenstange (11,14) an der beweglichen Werkzeugaufspannplatte (16) dieser Schließeinheit anbringbar ist.

10. Hydraulikeinrichtung nach einem der Ansprüche 1 bis 8, **dadurch gekennzeichnet, dass** der Hauptkolben (2) auf seiner dem Hilfskolben (7) abgewandten Seite eine weitere Kolbenstange (46) aufweist, deren Durchmesser kleiner ist als der Durchmesser der ersten Kolbenstange (11) und dass die weitere Kolbenstange (46) aus dem Zylinder (1) herausragt.

11. Hydaulikeinrichtung nach Anspruch 10, **dadurch gekennzeichnet, dass** der Zylinder (1) an seinem dem Spritzgießwerkzeug (24, 42) zugewandten Ende ein Endstück (17) aufweist, das als eine Werkzeugaufspannplatte einer Zwei-Platten-Schließeinheit einer Spritzgießmaschine ausgebildet ist und dass die weitere Kolbenstange (43) an der anderen Werkzeugaufspannplatte anbringbar ist.

12. Schließeinheit für eine Spritzgießmaschine mit einer Abstützplatte (17), einer feststehenden (44) und eine beweglichen (16) Werkzeugaufspannplatte, sowie einer oder mehreren Hydraulikeinrichtungen nach einem der Ansprüche 1 bis 9 zum Betätigen der beweglichen Werkzeugaufspannplatte (16).

13. Schließeinheit für eine Spritzgießmaschine mit einer Abstützplatte (17), einer feststehenden (44) und einer beweglichen (16) Werkzeugaufspannplatte, sowie einer oder mehreren Hydraulikeinrichtungen gemäß einem der Ansprüche 5 bis 9, wobei der Zylinder (1) an der Abstützplatte (17) befestigt oder ein Endstück des Zylinders (1) als Abstützplatte (17) ausgebildet ist, wobei die Abstützplatte (17) Durchbrüche (55) aufweist, durch die der Hilfskolben (7) hindurch verfahrbar ist, wobei die Kolbenstange (11) an der beweglichen Werkzeugaufspannplatte (16) befestigt ist und wobei der dritte Druckraum (10) während der Schließ- und der Öffnungsbewegung hydraulisch blockierbar ist.

14. Schließeinheit für eine Spritzgießmaschine mit einer Abstützplatte (17), einer feststehenden (44) und eine beweglichen (16) Werkzeugaufspannplatte, sowie einer oder mehreren Hydraulikeinrichtungen gemäß einem der Ansprüche 1 bis 9, wobei der Zylinder (1) an der Abstützplatte (17) befestigt oder ein Endstück des Zylinders (1) als Abstützplatte (17) ausgebildet ist, wobei die Abstützplatte (17) Durchbrüche (55) aufweist, durch die der Hilfskolben (7) hindurch verfahrbar ist, wobei die Kolbenstange (11) an der beweglichen Werkzeugaufspannplatte (16) befestigt ist, und wobei wenigstens ein Zusatzzylinder (56) an der Abstützplatte (17) und/oder an der feststehenden Werkzeugaufspannplatte (44) vorgesehen ist/sind, dessen Kolbenstange(n) (57) an der beweglichen Werkzeugaufspannplatte (16) befestigt ist/sind.

15. Schließeinheit nach Anspruch 14, **dadurch gekennzeichnet, dass** für die Schließbewegung der erste Druckraum (6) hydraulisch blockierbar, der dritte Druckraum (10) mit einer Druckmittelquelle (27) verbindbar und der Zusatzzylinder (56) abschaltbar ist.

16. Schließeinheit nach Anspruch 14, **dadurch gekennzeichnet, dass** für die Schließbewegung der erste Druckraum (6) hydraulisch blockierbar und der Zusatzzylinder (56) sowie der dritte Druckraum (10) mit einer Druckmittelquelle (27) verbindbar sind.

17. Schließeinheit nach einem der Ansprüche 14 bis 16, wobei der Zusatzzylinder (56) an der Abstützplatte (17) vorgesehen ist, **dadurch gekennzeichnet, dass** für die Öffnungsbewegung der erste Druckraum (6) hydraulisch blockierbar ist, der dritte Druckraum (10) sowie der erste Zusatzdruckraum (59) in dem Zusatzzylinder (56) hydraulisch entlastet sind, und der zweite Zusatzdruckraum (60) in dem Zusatzzylinder (56) mit einer Druckmittelquelle (27) verbindbar ist.

18. Schließeinheit nach einem der Ansprüche 14 bis 16, wobei der Zusatzzylinder (56') an der feststehenden Werkzeugaufspannplatte (44) vorgesehen ist, **dadurch gekennzeichnet, dass** für die Öffnungsbewegung der erste Druckraum (6) hydraulisch blockierbar ist, der dritte Druckraum (10) sowie der zweite Zusatzdruckraum (60') in dem Zusatzzylinder (56') hydraulisch entlastet sind, und der erste Zusatzdruckraum (59') in dem Zusatzzylinder (56') mit einer Druckmittelquelle (27) verbindbar ist.

19. Schließeinheit für eine Zwei-Platten-Spritzgießmaschine, mit einer feststehenden (44) und einer beweglichen (16) Werkzeugaufspannplatte sowie mit einer oder mehreren Hydraulikeinrichtungen gemäß Anspruch 10 oder 11 zum Betätigen der beweglichen Werkzeugaufspannplatte (16), wobei der Zylinder (1) an der feststehenden Werkzeugaufspannplatte (44) befestigt oder ein Endstück des Zylinders (1) als feststehende Werkzeugaufspannplatte (44) ausgebildet ist, und wobei die zweite Kolbenstange (46) durch die feststehende Werkzeugaufspannplatte (44) hindurchgeführt und an der beweglichen Werkzeugaufspannplatte (16) angebracht ist.

20. Schließeinheit für eine Zwei-Platten-Spritzgießmaschine, mit einer feststehenden (44) und einer beweglichen (16) Werkzeugaufspannplatte sowie mit einer oder mehreren Hydraulikeinrichtungen gemäß Anspruch 10 oder 11 zum Betätigen der beweglichen Werkzeugaufspannplatte (16), wobei der Zylinder (1) an der beweglichen Werkzeugaufspannplatte (16) befestigt oder ein Endstück des Zylinders (1) als bewegliche Werkzeugaufspannplatte (16) ausgebildet ist, und wobei die zweite Kolbenstange (46) durch die bewegliche Werkzeugaufspannplatte (16) hindurchgeführt und an der feststehenden Werkzeugaufspannplatte (44) angebracht ist.

21. Schließeinheit nach Anspruch 19 oder 20, **dadurch gekennzeichnet, dass** die zylindrische Ausnehmung (12) in dem Hilfskolben (7) an ihrem dem Hauptkolben (2) abgewandten Ende mit einem Endstück (49) verschlossen ist, so dass ein Druckraum (51) in dem Hilfskolben (7) gebildet wird.

22. Schließeinheit nach Anspruch 21, **dadurch gekennzeichnet, dass** der dritte Druckraum (10) zwischen dem Hilfskolben (7) und dem Zylinder (1) während der Schließ- und der Öffnungsbewegung hydraulisch blockierbar ist.

23. Schließeinheit nach Anspruch 21 oder 22, **dadurch gekennzeichnet, dass** der Druckraum (51) in dem Hilfskolben (7) während der Schließbewegung dekomprimierbar und für die Öffnungsbewegung mit einer Druckmittelquelle (27) verbindbar ist.

24. Schließeinheit nach Anspruch 19 oder 20, **dadurch gekennzeichnet, dass** die zylindrische Ausnehmung (12) in dem Hilfskolben (7) an ihrem dem Hauptkolben (2) abgewandten Ende offen ist, und dass wenigstens ein Zusatzzylinder (56, 56') an der feststehenden (44) und/oder der beweglichen (16) Werkzeugaufspannplatte vorgesehen ist/sind.

25. Schließeinheit nach Anspruch 24, **dadurch gekennzeichnet, dass** für die Schließbewegung der erste Druckraum (6) hydraulisch blockierbar, der dritte Druckraum (10) mit einer Druckmittelquelle verbindbar und der oder die Zusatzzylinder (56, 56') abschaltbar ist/sind.

26. Schließeinheit nach Anspruch 24, **dadurch gekennzeichnet, dass** für die Schließbewegung der erste Druckraum (6) hydraulisch blockierbar und der oder die Zusatzzylinder (56, 56') sowie der dritte Druckraum (10) mit einer Druckmittelquelle (27) verbindbar sind.

27. Schließeinheit nach einem der Ansprüche 24 bis 26, **dadurch gekennzeichnet, dass** für die Öffnungsbewegung der erste Druckraum (6) hydraulisch blockierbar und der dritte Druckraum (10) dekomprimierbar ist, und dass der oder die Zusatzzylinder (56, 56') so angeordnet und hydraulisch betätigbar sind, dass für die Öffnungsbewegung die größere Fläche des Kolbens oder der Kolben (58, 58') mit einem Druckmedium beaufschlagbar ist/sind.

## Claims

1. Hydraulic device for the back and forth movement and locking of a machine part, in particular for the opening, closing and locking of the mould halves of an injection-moulding tool in an injection-moulding machine, comprising a cylinder (1), in which a first pressure chamber (6) is provided with a pressure medium, a first main piston (2), wherein the main piston (2) has one or more piston rods (11) and may be immersed in the pressure medium located in the first pressure chamber (6), as well as a second auxiliary piston (7), which is axially movable in the cylinder (1), **characterised in that** the auxiliary piston (7) has recesses (12) in which the piston rods (11) of the main piston (2) can be displaced, and **in that** the opposing sides of the main piston (2) and auxiliary piston (7) have faces (40, 41) which can be brought into contact.

2. Hydraulic device according to claim 1, **characterised in that** the opposing sides of the main piston (2) and auxiliary piston (7) are designed in such a way that a second pressure chamber (43) is formed between the main piston (2) and the auxiliary piston (7) when the stop faces (40, 41) are in contact with one another, and **in that** a channel (29) opening into this pressure chamber (43) is provided to decompress the pressure medium enclosed in this pressure chamber (43).

3. Hydraulic device according to claim 2, **characterised in that** a vacuum can be produced in the second pressure chamber (43) formed between the main piston (2) and the auxiliary piston (7).

4. Hydraulic device according to any one of claims 1 to 3, **characterised in that** the stop face (40) of the main piston (2) and the stop face (41) of the auxiliary piston (7) are conical.

5. Hydraulic device according to any one of claims 1 to 4, **characterised in that** the auxiliary piston (7) has a first section (8) which slides on the inner wall of the cylinder (1) and, on its side (21) facing the main piston (2), delimits the first pressure chamber (6) and **in that** the auxiliary piston (7) also has a second section (9) which adjoins the first section (8) and of which the diameter is smaller than the internal diameter of the cylinder (1) in this region, so a third annular pressure chamber (10) is formed between the cylinder (1) and the auxiliary piston (7).

6. Hydraulic device according to any one of claims 1 to 5, **characterised in that** the cylinder (1) has a first section (37) with a first internal diameter (4) and a second section (38) with a second diameter (39), **in that** the region brushed by the auxiliary piston (7) during its movement is located inside the second section (38) and **in that** only the second section (38) has a surface which is sufficient for hydraulic requirements.

7. Hydraulic device according to any one of claims 1 to 6, **characterised in that** the second section (9) of the auxiliary piston (7) partially projects from the cylinder (1).

8. Hydraulic device according to any one of claims 1 to 7, **characterised in that** the piston rod (11) of the main piston (2) has a first section (13) which slides in the recess (12), **in that** the piston rod (11) also has a second section (14) adjoining the first section (13), with a smaller diameter than the first section (13), so a fourth, annular gap-shaped pressure chamber (18) is formed between the section (14) of the piston rod (11) and the auxiliary piston (7), and **in that** the second section (14) is guided through a hole (15) on the tool end of the recess (12) of the auxiliary piston (7).

9. Hydraulic device according to any one of claims 1 to 8, **characterised in that** the cylinder (1), on its end facing the moved machine part (16), has an end piece (17), which is formed as a support platen of a three-platen closing unit of an injection-moulding machine and **in that** the piston rod (11, 14) can be attached to the movable tool clamping platen (16) of this closing unit.

10. Hydraulic device according to any one of claims 1 to 8, **characterised in that** the main piston (2) on its side remote from the auxiliary piston (7), has a further piston rod (46), the diameter of which is smaller than the diameter of the first piston rod (11) and **in that** the further piston rod (46) projects from the cylinder (1).

11. Hydraulic device according to claim 10, **characterised in that** the cylinder (1), at its end facing the injection-moulding tool (24, 42), has an end piece (17) which is formed as a tool clamping platen of a two-platen closing unit of an injection-moulding machine and **in that** the further piston rod (43) can be attached to the other tool clamping platen.

12. Closing unit for an injection-moulding machine comprising a support platen (17), a fixed tool clamping platen (44) and a movable tool clamping platen (16), as well as one or more hydraulic devices according to any one of claims 1 to 9 for actuating the movable tool clamping platen (16).

13. Closing unit for an injection-moulding machine comprising a support platen (17), a fixed tool clamping platen (44) and a movable tool clamping platen (16), as well as one or more hydraulic devices according to any one of claims 5 to 9, wherein the cylinder (1) is fastened to the support platen (17) or an end piece of the cylinder (1) is formed as a support platen (17), wherein the support platen (17) has openings (55), through which the auxiliary piston (7) can be moved, wherein the piston rod (11) is fastened to the movable tool clamping platen (16) and wherein the third pressure chamber (10) can be hydraulically blocked during the closing and opening movement.

14. Closing unit for an injection-moulding machine comprising a support platen (17), a fixed tool clamping platen (44) and a movable tool clamping platen (16), as well as one or more hydraulic devices according to any one of claims 1 to 9, wherein the cylinder (1) is fastened to the support platen (17) or an end piece of the cylinder (1) is formed as a support platen (17), wherein the support platen (17) has openings (55), through which the auxiliary piston (7) can be moved, wherein the piston rod (11) is fastened to the movable tool clamping platen (16), and wherein at least one additional cylinder (56) is/are provided on the support platen (17) and/or on the fixed tool clamping platen (44), the piston rod(s) (57) of which is/are fastened to the movable tool clamping platen (16).

15. Closing unit according to claim 14, **characterised in that** for the closing movement, the first pressure chamber (6) can be hydraulically blocked, the third pressure chamber (10) can be connected to a pressure means source (27) and the additional cylinder (56) can be switched off.

16. Closing unit according to claim 14, **characterised in that** for the closing movement, the first pressure chamber (6) can be hydraulically blocked, and the additional cylinder (56) and the third pressure chamber (10) can be connected to a pressure means source (27).

17. Closing unit according to any one of claims 14 to 16, wherein the additional cylinder (56) is provided on the support platen (17), **characterised in that** for the opening movement, the first pressure chamber (6) can be hydraulically blocked, the third pressure chamber (10) and the first additional pressure chamber (59) in the additional cylinder (56) are hydraulically relieved, and the second additional pressure chamber (60) in the additional cylinder (56) can be connected to a pressure means source (27).

18. Closing unit according to any one of claims 14 to 16, wherein the additional cylinder (56') is provided on the fixed tool clamping platen (44), **characterised in that** for the opening movement, the first pressure chamber (6) can be hydraulically blocked, the third pressure chamber (10) and the second additional pressure chamber (60') in the additional cylinder (56') are hydraulically relieved, and the first additional pressure chamber (59') in the additional cylinder (56') can be connected to a pressure means source (27).

19. Closing unit for a two-platen injection-moulding machine, comprising a fixed tool clamping platen (44) and a movable tool clamping platen (16), as well as one or more hydraulic devices according to claim 10 or 11 for actuating the movable tool clamping platen (16), wherein the cylinder (1) is fastened to the fixed tool clamping platen (44) or an end piece of the cylinder (1) is formed as a fixed tool clamping platen (44), and wherein the second piston rod (46) is guided through the fixed tool clamping platen (44) and can be attached to the movable tool clamping platen (16).

20. Closing unit for a two-platen injection-moulding machine, comprising a fixed tool clamping platen (44) and a movable tool clamping platen (16), as well as one or more hydraulic devices according to claim 10 or 11 for actuating the movable tool clamping platen (16), wherein the cylinder (1) is fastened to the movable tool clamping platen (16) or an end piece of the cylinder (1) is formed as a movable tool clamping platen (16), and wherein the second piston rod (46) is guided through the movable tool clamping platen (16) and is attached to the fixed tool clamping platen (44).

21. Closing unit according to claim 19 or 20, **characterised in that** the cylindrical recess (12) in the auxiliary piston (7) is locked at its end remote from the main piston (2) with an end piece (49), so a pressure chamber (51) is formed in the auxiliary piston (7).

22. Closing unit according to claim 21, **characterised in that** the third pressure chamber (10) between the auxiliary piston (7) and the cylinder (1) can be hydraulically blocked during the closing and opening movement.

23. Closing unit according to claim 21 or 22, **characterised in that** the pressure chamber (51) in the auxiliary piston (7) can be decompressed during the closing movement and can be connected to a pressure means source (27) for the opening movement.

24. Closing unit according to claim 19 or 20, **characterised in that** the cylindrical recess (12) in the auxiliary piston (7) is open at its end remote from the main piston (2), and **in that** at least one additional cylinder (56, 56') is/are provided on the fixed tool clamping platen (44) and/or the movable tool clamping platen (16).

25. Closing unit according to claim 24, **characterised in that** for the closing movement, the first pressure chamber (6) can be hydraulically blocked, the third pressure chamber (10) can be connected to a pressure means source and the additional cylinder(s) (56, 56') can be switched off.

26. Closing unit according to claim 24, **characterised in that** for the closing movement, the first pressure chamber (6) can be hydraulically blocked and the additional cylinder(s) (56, 56') and the third pressure chamber (10) can be connected to a pressure means source (27).

27. Closing unit according to any one of claims 24 to 26, **characterised in that** for the opening movement, the first pressure chamber (6) can be hydraulically blocked and the third pressure chamber (10) can be decompressed, and **in that** the additional cylinder(s) (56, 56') are arranged and hydraulically actuable in such a way that for the opening movement, the larger face of the piston or pistons (58, 58') can be loaded with a pressure medium.

## Revendications

1. Dispositif hydraulique pour déplacement de va-et-vient ainsi que pour le verrouillage d'un élément de machine, en particulier pour l'ouverture, la fermeture et le maintien en position fermée des moitiés de moules d'un outil de moulage par injection dans une machine à mouler par injection, avec un vérin (1) dans lequel un premier espace de pression (6) avec un fluide de pression est prévu, avec un premier piston principal (2), le piston principal (2) comportant une ou plusieurs tiges de piston (11), et dans lequel du fluide de pression qui se trouve dans le premier espace de pression (6) peut flotter, ainsi qu'avec un deuxième piston auxiliaire (7) pouvant être déplacé axialement dans le vérin (1), **caractérisé en ce que** le piston auxiliaire (7) comporte des évidements (12) dans lesquels les tiges de pistons (11) du piston principal (2) peuvent être déplacées, et **en ce que** les faces opposées du piston principal (2) et du piston auxiliaire (7) comportent des surfaces pouvant être amenées en butée (40, 41).

2. Dispositif selon la revendication 1, **caractérisé en ce que** des faces opposées du piston principal (2) et du piston auxiliaire (7) sont configurés de telle manière que, lorsque des surfaces de butée (40, 41) entrent en contact l'une avec l'autre, un deuxième espace de pression (43) est formé entre le piston principal (2) et le piston auxiliaire (7) et **en ce qu'**un canal (29) qui aboutit dans cet espace de pression (43) est prévu pour décomprimer le fluide de pression enfermé dans cet espace de pression (43).

3. Dispositif hydraulique selon la revendication 2, **caractérisé en ce qu'**un vide peut être généré dans le deuxième espace de pression (43) formé entre le piston principal (2) et le piston auxiliaire (7).

4. Dispositif hydraulique selon une des revendications 1 à 3, **caractérisé en ce que** la surface de butée (40) du piston principal (2) et la surface de butée (41) du piston auxiliaire (7) sont réalisées dans une forme conique.

5. Dispositif hydraulique selon une des revendications 1 à 4, **caractérisé en ce que** le piston auxiliaire (7) comporte une première section (8) qui glisse sur la paroi intérieure du vérin (1) et limite sur sa face (21) dirigée vers le piston principal (2) le premier espace de pression (6), et **en ce que** le piston auxiliaire (7) comporte en outre une deuxième section (9) qui suit la première section (8), dont le diamètre est inférieur au diamètre intérieur du vérin (1) dans cette zone, si bien qu'un troisième espace de pression en forme d'espace annulaire (10) est formé entre le vérin (1) et le piston auxiliaire (7).

6. Dispositif hydraulique selon une des revendications 1 à 5, **caractérisé en ce que** le vérin (1) possède une première section (37) avec un premier diamètre intérieur (4) et une deuxième section (38) avec un deuxième diamètre intérieur (39), **en ce que** la zone parcourue par le piston auxiliaire (7) lors de son déplacement est située à l'intérieur de la deuxième section (38) et **en ce que** seule la deuxième section (38) comporte une surface qui satisfait à des exigences hydrauliques.

7. Dispositif hydraulique selon une des revendications 1 à 6, **caractérisé en ce que** la deuxième section (9) du piston auxiliaire (7) dépasse partiellement du vérin (1).

8. Dispositif hydraulique selon une des revendications 1 à 7, **caractérisé en ce que** la tige de piston (11) du piston principal (2) comporte une première section (13) qui glisse dans l'évidement (12), **en ce que** la tige de piston (11) comporte en outre une deuxième section (14) qui suit la première section (13) avec un diamètre inférieur à celui de la première section (13), si bien qu'un quatrième espace de pression (18) en forme d'espace annulaire est formé entre la section (14) de la tige de piston (11) et le piston auxiliaire (7) et que la deuxième section (14) est guidée à travers un perçage (15) à l'extrémité côté outil de l'évidement (12) du piston auxiliaire (7).

9. Dispositif hydraulique selon une des revendications 1 à 8, **caractérisé en ce que** le vérin (1) comporte à son extrémité dirigée vers l'élément mobile de la machine (16) une extrémité arrière (17) qui est réalisée comme plaque de soutien d'une unité de fermeture à trois plaques d'une machine à mouler par injection et **en ce que** la tige de piston (11, 14) peut être montée sur la plaque de serrage d'outil mobile (16) de cette unité de fermeture.

10. Dispositif hydraulique selon une des revendications 1 à 8, **caractérisé en ce que** le piston principal (2) comporte sur sa face détournée du piston auxiliaire (7) une autre tige de piston (46) dont le diamètre est inférieur au diamètre de la première tige de piston (11) et **en ce que** l'autre tige de piston (46) dépasse du vérin (1).

11. Dispositif hydraulique selon la revendication 10, **caractérisé en ce que** le vérin (1) comporte sur sa face dirigée vers l'outil de moulage par injection (24, 42) une extrémité arrière (17) qui est réalisée comme une plaque de serrage d'outil d'une unité de fermeture à deux plaques d'une machine à mouler par injection et **en ce que** l'autre tige de piston (43) peut être montée sur l'autre plaque de serrage d'outil.

12. Unité de fermeture pour une machine à mouler par injection avec une plaque d'appui (17) une plaque de serrage d'outil fixe (44) et une plaque de serrage d'outil mobile (16), ainsi qu'un ou plusieurs dispositifs hydrauliques selon une des revendications 1 à 9 pour actionner la plaque de serrage d'outil mobile (16).

13. Unité de fermeture pour une machine à mouler par injection avec une plaque d'appui (17), une plaque de serrage d'outil fixe (44) et une plaque de serrage d'outil mobile (16), ainsi qu'un ou plusieurs dispositifs hydrauliques selon une des revendications 5 à 9, le vérin (1) étant fixé à la plaque d'appui (17) ou une extrémité arrière du vérin (1) étant réalisée comme plaque d'appui (17), la plaque d'appui (17) comportant des percées (55) à travers lesquelles le piston auxiliaire (7) peut être déplacé, la tige de piston (11) étant fixée à la plaque de serrage d'outil mobile (16) et le troisième espace de pression (10) pouvant être bloqué hydrauliquement pendant le mouvement de fermeture et d'ouverture.

14. Unité de fermeture pour une machine à mouler par injection avec une plaque d'appui (17), une plaque de serrage d'outil fixe (44) et une plaque de serrage d'outil mobile (16), ainsi qu'un ou plusieurs dispositifs hydrauliques selon une des revendications 1 à 9, le vérin (1) étant fixé à la plaque d'appui (17) ou une extrémité arrière du vérin (1) étant réalisée comme plaque d'appui (17), la plaque d'appui (17) comportant des percées (55) à travers lesquelles le piston auxiliaire (7) peut être déplacé, la tige de piston (11) étant fixée à la plaque de serrage d'outil mobile (16) et au moins un vérin supplémentaire (56) étant prévu sur la plaque d'appui (17) et/ou sur la plaque de serrage d'outil fixe (44), dont la/les tige(s) de piston(s) (57) est/sont fixée(s) sur la plaque de serrage d'outil mobile (16).

15. Unité de fermeture selon la revendication 14, **caractérisée en ce que** pour le mouvement de fermeture le premier espace de pression (6) peut être bloqué hydrauliquement, le troisième espace de pression (10) relié à une source de fluide de pression (27) et le vérin supplémentaire (56) déconnecté.

16. Unité de fermeture selon la revendication 14, **caractérisée en ce que**, pour le mouvement de fermeture le premier espace de pression (6) peut être bloqué hydrauliquement et **en ce que** le vérin supplémentaire (56) ainsi que le troisième espace de pression (10) peuvent être reliés à une source de fluide de pression (27).

17. Unité de fermeture selon une des revendications 14 à 16, le vérin supplémentaire (56) étant prévu sur la plaque d'appui (17), **caractérisée en ce que** pour le mouvement d'ouverture le premier espace de pression (6) peut être bloqué hydrauliquement, **en ce que** le troisième espace de pression (10) ainsi que le premier espace de pression supplémentaire (59) dans le vérin supplémentaire (56) sont déchargés hydrauliquement, et **en ce que** le deuxième espace de pression supplémentaire (60) dans le vérin supplémentaire (56) peut être relié à une source de fluide de pression (27).

18. Unité de fermeture selon une des revendications 14 à 16, le vérin supplémentaire (56') étant prévu sur la plaque de serrage d'outil fixe (44), **caractérisée en ce que** pour le mouvement d'ouverture le premier espace de pression (6) peut être bloqué hydrauliquement, **en ce que** le troisième espace de pression (10) ainsi que le deuxième espace de pression (60') dans le vérin supplémentaire (56') sont déchargés hydrauliquement et **en ce que** le premier espace de pression supplémentaire (59') dans le vérin supplémentaire (56') peut être relié à une source de fluide de pression (27).

19. Unité de fermeture pour une machine à mouler par injection à deux plaques, avec une plaque de serrage d'outil fixe (44) et une plaque de serrage d'outil mobile (16) ainsi qu'avec un ou plusieurs dispositifs hydrauliques selon la revendication 10 ou 11 pour l'actionnement de la plaque de serrage d'outil mobile (16), le vérin (1) étant fixé sur la plaque de serrage d'outil fixe (44) ou une extrémité arrière du vérin (1) étant réalisée comme plaque de serrage d'outil fixe (44) et la deuxième tige de piston (46) étant guidée à travers la plaque de serrage d'outil fixe (44) et montée sur la plaque de serrage d'outil mobile (16).

20. Unité de fermeture pour une machine à mouler par injection à deux plaques, avec une plaque de serrage d'outil fixe (44) et une plaque de serrage d'outil mobile (16) ainsi qu'avec un ou plusieurs dispositifs hydrauliques selon la revendication 10 ou 11 pour l'actionnement de la plaque de serrage d'outil mobile (16), le vérin (1) étant fixé sur la plaque de serrage d'outil mobile (16) ou une extrémité du vérin (1) étant réalisée comme plaque de serrage d'outil mobile (16) et la deuxième tige de piston (46) étant guidée à travers la plaque de serrage d'outil mobile (16) et fixée sur la plaque de serrage d'outil fixe (44).

21. Unité de fermeture selon la revendication 19 ou 20, **caractérisée en ce que** l'évidement cylindrique (12) dans le piston auxiliaire (7) est fermé par une extrémité arrière (49) sur son côté détourné du piston principal (2), si bien qu'un espace de pression (51) est formé dans le piston auxiliaire (7).

22. Unité de fermeture selon la revendication 21, **caractérisée en ce que** le troisième espace de pression (10) entre le piston auxiliaire (7) et le vérin (1) peut être bloqué hydrauliquement pendant les mouvements de fermeture et d'ouverture.

23. Unité de fermeture selon la revendication 21 ou 22, **caractérisée en ce que** l'espace de pression (51) dans le piston auxiliaire (7) peut être décomprimé pendant le mouvement de fermeture et relié à une source de fluide de pression (27) pour le mouvement d'ouverture.

24. Unité de fermeture selon la revendication 19 ou 20, **caractérisée en ce que** l'évidement cylindrique (12) dans le piston auxiliaire (7) est ouverte à son extrémité détournée du piston principal (2) et **en ce qu'**au moins un vérin supplémentaire (56, 56') est prévu sur la plaque de serrage d'outil fixe (44) et/ou mobile (16).

25. Unité de fermeture selon la revendication 24, **caractérisée en ce que** pour le mouvement de fermeture le premier espace de pression (6) peut être bloqué hydrauliquement, le troisième espace de pression (10) relié à une source de fluide de pression et **en ce que** le ou les cylindres supplémentaires (56, 56') peuvent être déconnectés.

26. Unité de fermeture selon la revendication 24, **caractérisée en ce que** pour le mouvement de fermeture le premier espace de pression (6) peut être bloqué hydrauliquement et **en ce que** le ou les vérins supplémentaires (56, 56') ainsi que le troisième espace de pression (10) peuvent être reliés à une source de fluide de pression (27).

27. Unité de fermeture selon une des revendications 24 à 26, **caractérisée en ce que** pour le mouvement d'ouverture le premier espace de pression (6) peut être bloqué hydrauliquement et le troisième espace de pression (10) décomprimé et **en ce que** le ou les vérins supplémentaires (56, 56') sont disposés et peuvent être actionnés hydrauliquement de telle manière que, pour le mouvement d'ouverture, la surface plus grande du piston ou des pistons (58, 58') peut être exposée à un fluide de pression.
